# EUROPEAN PATENT SPECIFICATION

(11) **EP 0 898 756 B1**
(45) Date of publication and mention of the grant of the patent: **31.05.2000**
(21) Application number: 97930040.7
(22) Date of filing: 18.06.1997
(51) Int. Cl.: G06F 17/60

(54) **FRAMEWORK FOR CONSTRUCTING SHARED DOCUMENTS THAT CAN BE COLLABORATIVELY ACCESSED BY MULTIPLE USERS**
RAHMENWERKSYSTEM FÜR GEMEINSAME DOKUMENTE-KONSTRUKTION MIT KOLLABORATIVEM MEHRFACHBENUTZERZUGRIFF
STRUCTURE POUR LA CONSTRUCTION DE DOCUMENTS COMMUNS ACCESSIBLES A DE MULTIPLES UTILISATEURS

(30) Priority: 20.06.1996 US 667118; 20.06.1996 US 667179
(43) Date of publication of application: 03.03.1999
(73) Proprietor: Object Technology Licensing Corporation, Cupertino, CA 95014-2233 (US)
(72) Inventor: ADAMS, William, Oakland, CA 94607 (US)
(74) Representative: Kindermann, Manfred
(86) International application number: US9710421
(87) International publication number: WO9749051

(56) References cited:
- WO-A-94/19751
- OPPER S: "A groupware toolbox" BYTE, DEC. 1988, USA, vol. 13, no. 13, ISSN 0360-5280, pages 275-282, XP002043747
- CHIEN-HUNG LIN ET AL: "CCDES-a Collaborative Compound Document Editing System" COMPUTER COMMUNICATIONS, JUNE 1996, ELSEVIER, UK, vol. 19, no. 6-7, ISSN 0140-3664, pages 590-596, XP000599909
- KOCH M: "Design issues and model for a distributed multi-user editor" COMPUT. SUPPORT. COOP. WORK (CSCW) (NETHERLANDS), COMPUTER SUPPORTED COOPERATIVE WORK (CSCW), 1995, KLUWER ACADEMIC PUBLISHERS, NETHERLANDS, vol. 3, no. 3-4, ISSN 0925-9724, pages 359-378, XP002043748
- HAAKE J M ET AL: "SUPPORTING COLLABORATIVE WRITTING OF HYPERDOCUMENTS IN SEPIA" SHARING PERSPECTIVES, TORONTO, OCT. 31 - NOV. 4, 1992, no. -, 31 October 1992, TURNER J;KRAUT J, pages 138-146, XP000337575

## Description

### Copyright Notification

Portions of this patent application contain materials that are subject to copyright protection. The copyright owner has no objection to the facsimile reproduction by anyone of the patent document, or the patent disclosure, as it appears in the Patent and Trademark Office. All other rights are expressly reserved.

### Field of the Invention

This invention generally relates to improvements in computer systems and, more particularly, to frameworks that allow application developers to construct applications that allow collaborative access to a document by multiple users.

### Background of the Invention

Current computing applications are largely single user systems. For example, conventional editing applications allow a single user to open a file and make modifications to the content. If while the file is open by a first user, a second user attempts to open the file, the second user will be prevented from opening or modifying the file. The second user is sometimes permitted to obtain a snapshot copy of the file. The snapshot copy, however, is not updated with any of the subsequent modifications made to the original copy made by the first user. Thus, the second user is unable to share in the first user's ideas manifested as file modifications. Moreover, the second user is prevented from modifying the content of the original file and, thus, is prevented from sharing his or her ideas manifested as file modifications. In short, the first and second user are unable to collaboratively edit the file.

Collaboration, as the term is used herein, implies an ability for multiple clients to share ideas. This sharing includes the ability to automatically express one's ideas to the other members without having to have the other members explicitly solicit the ideas. Collaboration also includes the ability for each member to automatically receive any ideas from members who are transmitting ideas. Thus, at a minimum, collaboration implies communication among members that are party to the collaborative effort. This communication/ collaboration may follow many models. A "brain-storming" session is an unrestrained model of collaboration. On the other hand, a "round-robin" model, in which each member has a specified turn to express ideas, is a constrained model of collaboration.

There is a need in the art for collaborative software. More particularly, there is a need in the art for software tools that allow collaboration functionality to be efficiently implemented into application programs, and for software tools that allow documents to be collaboratively accessed by multiple users in a collaborative session.

WO 94/19751 discloses an object-oriented collaborative work system for multiple users. This system allows the real-time collaboration of at least two users of an application and includes means for initiating processing steps of the application by user commands and means for generating the same view of the results of the processing steps on display devices of all users. If the application is a text processor, two or more user can edit the same document at the same time. Commands entered by a user are received by a model command dispatcher which distributes these commands to a model server. The model server maintains a list of collaborators and decides which collaborator has the authority to change the model and can get a command. The model server distributes the commands to all authorized and active collaborators. This system does not provide measures for insuring that the commands arrive in a predetermined order.

### Summary of the Invention

The invention provides an improved collaborative work system and method as defined in the claims 1 and 8.

The invention provides a set of interrelated Shared Document Framework classes, which allow applications to create objects for manipulating a shared document that can be simultaneously accessed by multiple users in an interactive and real-time manner. A collaborator can thus view changes being made to the document by another collaborator as the changes are being made.

The Shared Document Framework provides a mechanism for each collaborator to obtain a replicated copy of the shared document in the collaborator's local address space, which copy is in synchronism with all other replicated copies of the shared document. In particular, a mechanism is provided for creating a document server which manages an original copy of the document and supplies the replicated copies to the collaborators.

Objects instantiated from the Shared Document Framework use a caucus system (transponder) to distribute commands generated by each collaborator to all collaborator sites. Each collaborator session and the document server are caucus members (collaborators). The caucus mechanism (transponder) ensures global-ordering of the commands so that each caucus member (collaborator) receives the same sequence of commands. Upon receiving a command from the caucus (transponder), each caucus member (i.e., each collaborator session and the document server) apply the command to the document. Because only commands may change the state of the document, the replicated copies are assured of being in synchronism with the original. The caucus mechanism (transponder) includes pause and resume caucus logic, which is used by the document server to supply replicated copies of the document to collaborators that are in synchronism with other existing copies.

In accordance with a preferred embodiment, when a command binding is sent to the caucus mechanism (transponder) by a collaborator, the collaborator keeps a copy of the command binding. Each command binding received from the caucus mechanism (transponder) is compared against this stored copy so that the collaborator can detect when its own command binding is echoed back from the caucus mechanism (transponder). When an echoed command binding is received, the stored original command is executed instead. This latter operation insures that any exceptions raised by the execution of the command binding are associated with the original command binding and not the echoed version.

### Brief Description of the Drawings

Figure 1 is a schematic block diagram of a conventional computer system on which a preferred embodiment of the invention may execute;
Figure 2 is a schematic illustration comparing conventional programming techniques with framework-style programming;
Figure 3 illustrates the steps of using Send Message instances of a preferred embodiment;
Figure 4 illustrates the steps of using Receive Message instances of a preferred embodiment;
Figure 5 is a state diagram for a transponder instance of a preferred embodiment;
Figure 6 is an architectural diagram illustrating the use of the invention in the context of a hypothetical application program;
Figure 7 illustrates hierarchy of caucus member classes;
Figure 8 illustrates hierarchy of send message classes;
Figure 9 illustrates hierarchy of receive message classes; and
Figure 10 illustrates hierarchy of transponder classes;
Figure 11 is a schematic diagram illustrating the creation of the caucus architecture by means of the member and transponder objects;
Figure 12 is a schematic diagram illustrating read and send message objects and accompanying data streams used by an application program to communicate with its caucus member object;
Figures 13A-B when placed together form an illustrative flowchart showing the file-in logic of a preferred embodiment;
Figures 14A-C illustrate an exemplary state of the computing system after the original compound document and several copies are in existence.
Figure 15 is an illustrative flowchart showing command binding processing in accordance with a preferred embodiment of the invention.

### Detailed Description of a Preferred Embodiment of the Invention

The invention is preferably practiced in the context of an operating system resident on a personal computer such as the IBM® PS/2® or Apple® MACINTOSH® computer or on IBM computers utilizing the AIX operating system.

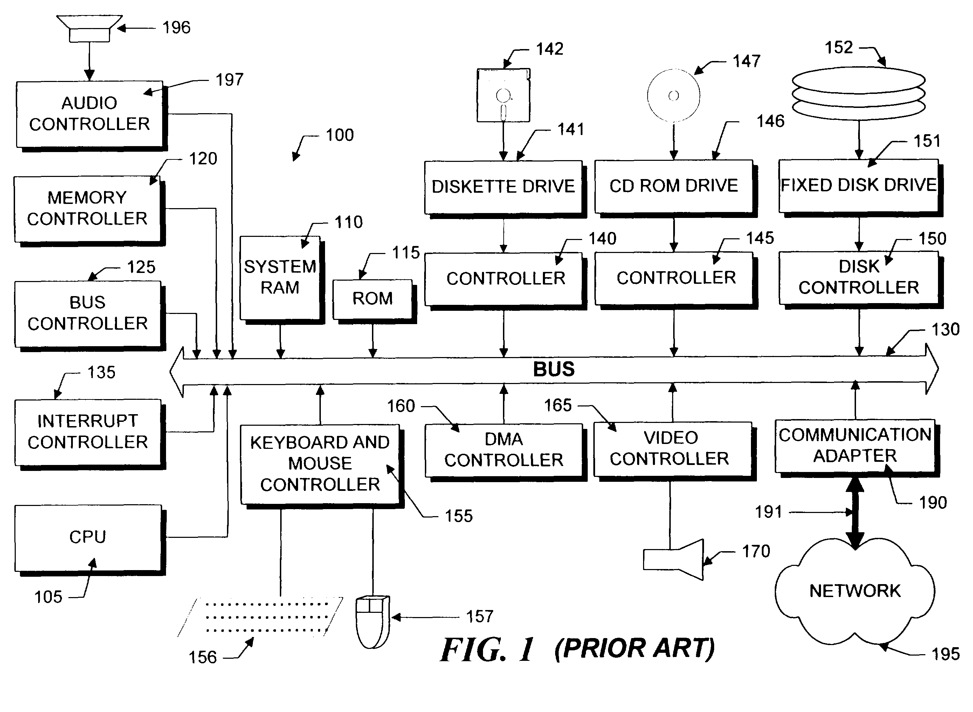

Figure 1 illustrates the system architecture for a conventional computer system, such as a MACINTOSH® computer developed and sold by the Apple Computer Corporation, Cupertino, California on which the inventive security system can operate. The exemplary computer system of Figure 1 is for descriptive purposes only. Though the description below may refer to terms commonly used in describing particular computer systems, such as an Apple MACINTOSH® computer, the description and concepts equally apply to other systems, including systems having architectures dissimilar to Figure 1.

The exemplary computer 100 includes a central processing unit ("CPU") 105, which may include a conventional microprocessor; a system random access memory ("RAM") 110 for temporary storage of information and a read only memory ("ROM") 115 for permanent storage of information. A memory controller 120 is provided for controlling system RAM 110; a bus controller 125 is provided for controlling bus 130; and an interrupt controller 135 is used for receiving and processing various interrupt signals.

Mass storage may be provided by a diskette 142, a CD-ROM disk 147 or a hard disk 152. The diskette 142 can be inserted into a diskette drive 141, which is, in turn, connected to bus 130 by a controller 140. Similarly, the CD-ROM disk 147 can be inserted into a CD-ROM drive 146, which is also connected by a controller 145 to bus 130. Finally, hard disks 152 are part of a fixed disk drive 151, which is connected to bus 130 by controller 150.

Input and output to computer system 100 are provided by a number of devices. For example, a keyboard and mouse controller 155 connects to bus 130 for controlling a keyboard input device 156 and a mouse input device 157. A DMA controller 160 is provided for performing direct memory access to system RAM 110. A visual display is generated by a video controller 165, which controls a video output display 170. The computer also includes a communications adapter 190 which allows the system to be interconnected to a local area network (LAN) or a wide area network (WAN) which is schematically illustrated by bus 191.

The computer 100 is generally controlled and coordinated by operating system software, such as the SYSTEM 7® operating system, available from Apple Computer Corporation, Cupertino, California or the AIX® operating system available from International Business Machines Corporation, Boca Raton, Florida. Conventional operating systems control and schedule computer processes for execution, perform memory management, provide file system, networking, and I/O services, and provide a user interface, such as a graphical user interface ("GUI"), among other things. User applications, such as editors and spread sheets, directly or indirectly, rely on these and other capabilities of the operating system.

In a preferred embodiment, the invention is implemented in the C++ programming language using object oriented programming techniques. As will be understood by those skilled in the art, Object-Oriented Programming (OOP) objects are software entities comprising data structures and operations on the data. Together, these elements enable objects to model virtually any real-world entity in terms of its characteristics, represented by its data elements, and its behavior, represented by its data manipulation functions. In this way, objects can model concrete things like people and computers, and they can model abstract concepts like numbers or geometrical concepts. The benefits of object technology arise out of three basic principles: encapsulation, polymorphism and inheritance.

Objects hide, or encapsulate, the internal structure of their data and the algorithms by which their functions work. Instead of exposing these implementation details, objects present interfaces that represent their abstractions cleanly with no extraneous information. Polymorphism takes encapsulation a step further. The idea is many shapes, one interface. A software component can make a request of another component without knowing exactly what that component is. The component that receives the request interprets it and figures out according to its variables and data, how to execute the request. The third principle is inheritance, which allows developers to reuse pre-existing design and code. This capability allows developers to avoid creating software from scratch. Rather, through inheritance, developers derive subclasses that inherit behaviors, which the developer then customizes to meet their particular needs.

A prior art approach is to layer objects and class libraries in a procedural environment. Many application frameworks on the market take this design approach. In this design, there are one or more object layers on top of a monolithic operating system. While this approach utilizes all the principles of encapsulation, polymorphism, and inheritance in the object layer, and is a substantial improvement over procedural programming techniques, there are limitations to this approach. These difficulties arise from the fact that while it is easy for a developer to reuse their own objects, it is difficult to use objects from other systems and the developer still needs to reach into the lower non-object layers with procedural Operating System (OS) calls.

Another aspect of object oriented programming is a framework approach to application development. One of the most rational definitions of frameworks come from Ralph E. Johnson of the University of Illinois and Vincent F. Russo of Purdue. In their 1991 paper, *Reusing Object-Oriented Designs,* University of Illinois tech report UIUCDCS91-1696 they offer the following definition: "An abstract class is a design of a set of objects that collaborate to ry out a set of responsibilities. Thus, a framework is a set of object classes that collaborate to execute defined sets of computing responsibilities." From a programming standpoint, frameworks are essentially groups of interconnected object classes that provide a pre-fabricated structure of a working application. For example, a user interface framework might provide the support and "default" behavior of drawing windows, scroll bars, menus, etc. Since frameworks are based on object technology, this behavior can be inherited and overridden to allow developers to extend the framework and create customized solutions in a particular area of expertise. This is a major advantage over traditional programming since the programmer is not changing the original code, but rather extending the software. In addition, developers are not blindly working through layers of code because the framework provides architectural guidance and modeling but at the same time frees them to then supply the specific actions unique to the problem domain.

From a business perspective, frameworks can be viewed as a way to encapsulate or embody expertise in a particular knowledge area. Corporate development organizations, Independent Software Vendors (ISV)s and systems integrators have acquired expertise in particular areas, such as manufacturing, accounting, or currency transactions as in our example earlier. This expertise is embodied in their code. Frameworks allow organizations to capture and package the common characteristics of that expertise by embodying it in the organization's code. First, this allows developers to create or extend an application that utilizes the expertise, thus the problem gets solved once and the business rules and design are enforced and used consistently. Also, frameworks and the embodied expertise behind the frameworks have a strategic asset implication for those organizations who have acquired expertise in vertical markets such as manufacturing, accounting, or bio-technology would have a distribution mechanism for packaging, reselling, and deploying their expertise, and furthering the progress and dissemination of technology.

Historically, frameworks have only recently emerged as a mainstream concept on personal computing platforms. This migration has been assisted by the availability of object-oriented languages, such as C++. Traditionally, C++ was found mostly on UNIX systems and researcher's workstations, rather than on Personal Computers in commercial settings. It is languages such as C++ and other object-oriented languages, such as Smalltalk and others, that enabled a number of university and research projects to produce the precursors to today's commercial frameworks and class libraries. Some examples of these are Interviews from Stanford University, the Andrew toolkit from Carnegie-Mellon University and University of Zurich's ET++ framework.

There are many kinds of frameworks depending on what level of the system you are concerned with and what kind of problem you are trying to solve. The types of frameworks range from application frameworks that assist in developing the user interface, to lower level frameworks that provide basic system software services such as communications, printing, file systems support, graphics, etc. Commercial examples of application frameworks are MacApp (Apple), Bedrock (Symantec), OWL (Borland), NeXTStep App Kit (NeXT), and Smalltalk-80 MVC (ParcPlace) to name a few.

Programming with frameworks requires a new way of thinking for developers accustomed to other kinds of systems. In fact, it is not like "programming" at all in the traditional sense. In old-style operating systems such as DOS or UNIX, the developer's own program provides all of the structure. The operating system provides services through system calls-the developer's program makes the calls when it needs the service and control returns when the service has been provided. The program structure is based on the flow-of-control, which is embodied in the code the developer writes.

When frameworks are used, this is reversed. The developer is no longer responsible for the flow-of-control. The developer must forego the tendency to understand programming tasks in term of flow of execution. Rather, the thinking must be in terms of the responsibilities of the objects, which must rely on the framework to determine when the tasks should execute. Routines written by the developer are activated by code the developer did not write and that the developer never even sees. This flip-flop in control flow can be a significant psychological barrier for developers experienced only in procedural programming. Once this is understood, however, framework programming requires much less work than other types of programming.

In the same way that an application framework provides the developer with prefab functionality, system frameworks, such as those included in a preferred embodiment, leverage the same concept by providing system level services, which developers, such as system programmers, use to subclass/override to create customized solutions. For example, consider a multi-media framework which could provide the foundation for supporting new and diverse devices such as audio, video, MIDI, animation, etc. The developer that needed to support a new kind of device would have to write a device driver. To do this with a framework, the developer only needs to supply the characteristics and behavior that is specific to that new device.

The developer in this case supplies an implementation for certain member functions that will be called by the multi-media framework. An immediate benefit to the developer is that the generic code needed for each category of device is already provided by the multi-media framework. This means less code for the device driver developer to write, test, and debug. Another example of using systems framework would be to have separate I/O frameworks for SCSI devices, NuBus cards, and graphics devices. Because there is inherited functionality, each framework provides support for common functionality found in its device category. Other developers could then depend on these consistent interfaces to all kinds of devices.

A preferred embodiment takes the concept of frameworks and applies it throughout the entire system. For the commercial or corporate developer, systems integrator, or OEM, this means all the advantages that have been illustrated for a framework such as MacApp can be leveraged not only at the application level for such things as text and user interfaces, but also at the system level, for services such as graphics, multi-media, file systems, I/O, testing, etc.

Application creation in the architecture of a preferred embodiment will essentially be like writing domain-specific puzzle pieces that adhere to the framework protocol. In this manner, the whole concept of programming changes. Instead of writing line after line of code that calls multiple API hierarchies, software will be developed by deriving classes from the preexisting frameworks within this environment, and then adding new behavior and/or overriding inherited behavior as desired.

Thus, the developer's application becomes the collection of code that is written and shared with all the other framework applications. This is a powerful concept because developers will be able to build on each other's work. This also provides the developer the flexibility to customize as much or as little as needed. Some frameworks will be used just as they are. In some cases, the amount of customization will be minimal, so the puzzle piece the developer plugs in will be small. In other cases, the developer may make very extensive modifications and create something completely new. In a preferred embodiment, as shown in Figure 1, an application program resident in the RAM 110, and under the control of the CPU 105, is responsible for managing various tasks using an object oriented document framework.

A preferred embodiment of the instant invention is implemented as a system-level application framework. A system-level framework is part of the platform image and library set, rather than being compiled into the application image. In this fashion, applications executing on the system can share the use of the framework components, rather than having the framework components replicated in each application's image.

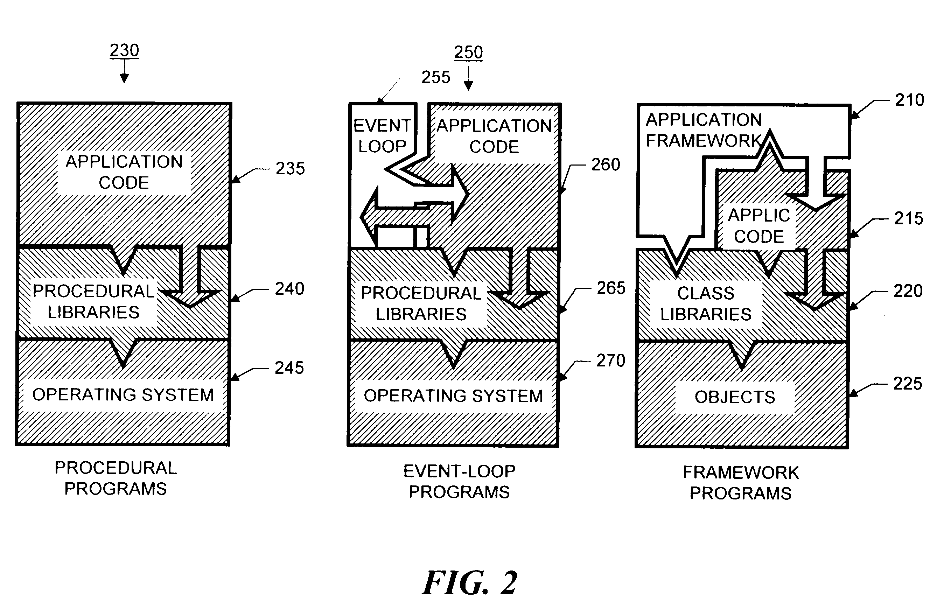

Figure 2 helps explain the distinctions between an application framework 210 and the more conventional techniques of procedural programming 230 and event-loop, reactive programming 250. In procedural programming, the underlying application 235 can call procedures in libraries 240 provided by and layered on top of the operating system 245. The procedures provided by library 240 perform commonly encountered operations. The application program 235 has a sequential flow of control, which is understood by skilled artisans upon reviewing source code descriptions of the application.

In procedural programming, the programer is responsible for dictating the overall behavior and flow of control of the application. The system components, e.g., the procedural libraries 240 and operating system 245, provide only fine-grained capabilities. The libraries 240 and operating system 245 have no information about a program's code 235 or its behavior.

Event-loop programming 250 has a different paradigm of control than procedural programming and is usually associated with the development of graphical user interfaces ("GUIs"). Under the event-loop paradigm, a portion of code known as an event loop 255, in effect, monitors a predefined set of events, such as mouse or keyboard actions. In response to detecting such events, the event loop 255 invokes different portions of an application program 260. In some systems, e.g., X Windows, these portions of the application program are known as "callback procedures." Unlike procedural programming 230, the application code 260 does not determine the flow of control. Rather, the flow of control depends on random user actions, which are detected by the event loop 255. The application program 260 "reacts" to events detected by the event loop 255. The individual pieces, e.g., callback procedures, of the application program 260 may call procedural libraries 265. The procedures in the libraries 265 are similar to those of libraries 240. Similarly to procedural programs 235, the application code 260 in the event-loop paradigm is layered on top of the libraries 265 and operating system 270. Event-loop programming requires application developers to write a substantial amount of code. This is so, because the event-loop 255 detects events only and does not provide behavior. These events must then be interpreted by the application code 260. That is, like the case of procedural programming, in event-loop programming, the application developer is still responsible for dictating the overall behavior of the overarching application.

The concept of an application framework 210 carries the event-loop concept 250 further. In short, an application framework 210 provides a set of generic capabilities **and** predefined behavior. The application developer uses application code 215 to replace some of the generic capabilities of the framework 210 with specific capabilities of the application code 215. For example, the application framework 210 may provide a robust set of user interface behavior, including a predefined set of windows, menus, and dialogs. The particular application may only need to customize one of the general aspects of the framework 210, such as a particular arrangement in one of the windows. Because the framework's generic capabilities, for the most part. satisfy the application's needs, the application developer needs only replace that one aspect of the framework 210 with code 215, while retaining the other aspects of framework 210. Using the object-oriented techniques discussed above, this replacement may be performed, for example, by creating new subclasses derived from the classes provided by the framework 210 and the class libraries 220 and by exploiting polymorphism. The application code-provided subclass information would then provide the particular capabilities sought by the application. In addition, particular capabilities of an application may also be achieved by the application code 215 appropriately instructing the generic capabilities provided by the framework 210 by getting and setting information from objects 225 created from the framework 210 and class libraries 220, for example.

More particularly, if the application code 215 supplements the generic capabilities of framework 210 by providing new subclasses derived from the framework provided classes, a well behaved combination of framework 210 and code 215 will be capable of using the new subclasses by exploiting polymorphism. (The general concept of polymorphism is known.) In short, polymorphism, among other things, allows for the run-time selection of a member function to be invoked based on the class of the invoking object. Consequently, the application can use a new class and invoke a member function therefrom and be assured that the desired behavior results. That is, the member function from the new subclass, not the parent class, may be correctly invoked, and the new subclass and instances created therefrom will correctly operate with the framework classes, No recompiles of the framework 210 or libraries 220 are needed. When objects created from the new subclass are involved, invocations of member functions of objects created from the new subclass will be properly selected, during the runtime execution, as a result of the polymorphism.

A preferred embodiment of the inventive Shared Document Framework uses known aspects of the CommonPoint™ Application System, sold by Taligent, Inc., of Cupertino, California. The CommonPoint Application System provides a pervasive set of interrelated and interdependent system-level frameworks, extending through all aspects of application and system software, i.e., not just GUIs. These frameworks are described in various publications, including the following user manuals, which are hereby incorporated by reference in their entirety: AN INTRODUCTION TO THE COMMONPOINT APPLICATION SYSTEM (1995), DISTRIBUTED COMPUTING (1995), OS SERVICES (1995), PROGRAMMING WITH THE PRESENTATION FRAMEWORK: TUTORIAL (1995), and DESKTOP FRAMEWORK CONCEPTS (1995).

More particularly, a preferred embodiment of the Shared Document Framework utilizes a Caucus Framework. As will be explained in more detail below, the Caucus Framework is utilized with a Compound Document Framework ("CDF"), provided by the CommonPoint Application System. The Caucus Framework supports the communicative aspects underlying the collaboration, and as will be explained below, allows multiple collaborators to simultaneously and interactively manipulate a compound document in real-time.

The CDF and Caucus Framework are described below to the extent that they are material to understanding a preferred embodiment of the instant invention. Skilled artisans will appreciate that, although the preferred embodiment is described with reference to the CDF and the Caucus Framework, the invention transcends these Frameworks and is not limited to their use.

### I. The CDF

The CDF is a set of known interrelated and interdependent classes that allow a client application to construct and manipulate compound documents having multiple data object types. When using the CDF, a compound document may be created by constructing an instance of a TCompoundDocument class, (hereinafter an instance of TCompoundDocument is referred to as a "compound document.").

A compound document is a container that embeds multiple types of data objects, such as text objects, graphic objects, etc., or embeds references to such data objects. (The general concepts of containers and "embedding" data are known).

The CDF is polymorphic and supports "native" and "foreign" embeddable data objects. A native data object is created from a CDF-provided data class, such as TText and TGraphic. A foreign data object is created from an application-provided data subclass, derived from a CDF-provided classes. (The general concept of deriving a subclass is known).

Each embeddable component is a "document component," which includes a model and a presenter state. For example, a document component may be a cylinder graphic data type that is transformed to appear as a cone. The model specifies what is embedded, e.g., a cylinder. The presenter state indicates how the model should be transformed to be presented to the end user, e.g., transform information that modifies the cylinder into a cone.

One of the interrelated frameworks used with the CDF is a Selection Framework. The Selection Framework provides a set of selection classes from which selection objects may be created (hereinafter selection objects are referred to as "selections"). A selection may specify the entire document or portions of a document. For example, a text-specific selection may specify a subset of the text data, such as a text range, e.g., characters 5 through 10. In short, selections specify a portion of the compound document that is of interest and provide an access interface to the model or the presentation state of that portion.

Another of the interrelated frameworks used with the CDF is a Command Framework. The command framework provides a set of command classes from which command objects may be created and from which new application-specific subclasses may be derived. For example, an editing application will only use editing commands, and no other mechanism, to modify the content of a compound document. The editing command classes, used to create the editing command objects, are provided by the editing application.

The command framework supports atomic and incremental commands. An exemplary incremental command is dragging a cursor, which needs incremental input from a mouse, specifying how an entity is being dragged with the mouse. Because incremental commands need multiple input events to define the overall command, incremental commands require state processing to track the overall command. The CDF and Command Framework support such incremental command semantics, as will be further explained below.

A command encapsulates a change to a "target." For many commands, the target will be a selection, for example, specifying a portion of a compound document. However, targets may also include other targets and other mechanisms. A "command binding" is a command and selection pair. (hereinafter "commands" refer to command objects and command bindings). Well behaved applications use only command objects to operate on a document.

### II. The Caucus Framework

The functional aspects of the inventive Caucus Framework are first outlined, followed by a detailed description of the various classes and agents provided by the Caucus Framework. Simply stated, a caucus, constructed with the Caucus Framework, provides a reliable, globally-ordered, network independent broadcast protocol so that a member may send messages to all members and so that a caucus member may receive messages sent from all other caucus members. "Global ordering" means that each member is guaranteed to receive the same sequence of messages. Thus, application code developed with the inventive Caucus Framework can run on any system having the Caucus Framework. Application programs may use concrete classes provided by the Framework, or derive their own new subclasses off of Caucus Framework-provided classes.

Caucus members may join and leave the caucus at will. Once a member is in a caucus, the member can send messages to and receive messages from the other caucus members. Caucus members may exist on different platforms. No messages are lost, and the caucus is capable of detecting and recovering from a crash or from the loss of some of its members.

The first message that a member is guaranteed to receive is the first message that that member sends. The member may receive messages from other senders earlier than this, but there is no guarantee. Rather, it depends upon the caucus traffic. After a member leaves the caucus, that member will not receive messages. Each client that desires to become a member of a caucus will use a subclass of TCaucusMember, discussed below. The subclasses used by various members need not be identical, but should be compatible. When non-identical member classes are used, the application code is responsible for handling any compatibility issues. The caucus itself provides no enforcement mechanism for detecting incompatible subclasses, and instead this responsibility belongs to the application using the Caucus Framework. In addition, the Caucus Framework itself provides no mechanisms to guaranty fairness or avoid starvation of resources. If such a policy is needed, application code is responsible for providing the necessary logic. The Caucus Framework is designed to have an unrestrained model of collaboration so that it can be supplemented by application programmers in the most flexible manner possible in order to implement other collaboration models.

Caucuses are closed. That is, only caucus members may use the caucus mechanisms for sending and receiving messages.

As stated above, clients interact with a caucus via objects created from subclasses "derived" from a TCaucusMember class, discussed below. (Creating an object from a class is also known as creating an "instance" of the subclass derived from the TCaucusMember class and is also known as "instantiation" of the subclass.) (The general concept of "deriving" subclasses is known.)

The TCaucusMember class provided by the invention is a so-called "abstract base class." Abstract base classes are not directly used to create objects; that is, an application will not instantiate this class directly to create an object or instance of the class. Instead, the base class provides a base level definition of behavior - in short, a skeletal structure. A base class is designed to be supplemented and overridden by subclasses.

In addition to the above base class, the invention also provides a concrete subclass, TStandardCaucusMember, which is derived from TCaucusMember. Because it is concrete, TStandardCaucusMember can be used by application code to create Member objects, i.e., interfaces to the caucus. As suggested above, application developers may wish to derive their own subclasses from the TCaucusMember base class or the TStandardCaucusMember subclass, if needed.

TStandardCaucusMember and associated interface classes, described below, implement a caucus protocol that uses message streaming. (Message streaming is known). In addition, the TStandardCaucusMember caucus protocol is unrestrained; that is, there is no built in detection or enforcement of any particular order in which members may send messages. In some sense, this type of caucus protocol models the collaboration involved in a brainstorming session. Rather than dictating any policy through software logic, the Caucus Framework, and in particular the classes associated with TStandardCaucusMember, relies on user behavior to attain well behaved collaboration. For example, if users provide their messages so closely in time that cacophony results, the Caucus Framework relies on the common sense of the users to solve the cacophony. For example, one member may use a message to suggest that there are too many messages being sent and that they should take particular turns.

Although the Caucus Framework does not dictate or detect any particular structure for clients, typical clients using the Caucus Framework will likely have two threads associated with a given Caucus Member instance, i.e., an object instantiated from a concrete subclass of TCaucusMember, such as TStandardCaucusMember. One thread will be responsible for sending messages to the caucus, and the other will be responsible for receiving messages from the caucus.

A client joins a caucus by creating an instance from a concrete TCaucusMember subclass, e.g. TStandardCaucusMember. As will be further explained below, creating a Member instance automatically sends a join message to the caucus. Upon joining the caucus, the client becomes a "member" of the caucus. Each member receives a unique caucus "identity." This identity is associated with the member for as long as the caucus exists and as long the member remains active. If the client "leaves" the caucus and later rejoins, the client will receive a new identity. Application code, as well as the Caucus Framework itself, can use the identity to track activities of different members of the caucus or to filter certain messages, for example.

To send a message, a client having a Member instance creates a Send Message object from a TCaucusSendMessage class, described below. More particularly, as suggested above, a send thread associated with the client will create the TCaucusSendMessage instance. After creating the TCaucusSendMessage instance, the send thread streams message data into the TCaucusSendMessage object and then destructs the object. (The general concept of object destruction is known; among other things, destruction may be done explicitly or be done by leaving an object's scope.) The destructor member function of the TCaucusSendMessage class, in turn, causes the message to be transmitted to the caucus. The details of how this is accomplished are described below.

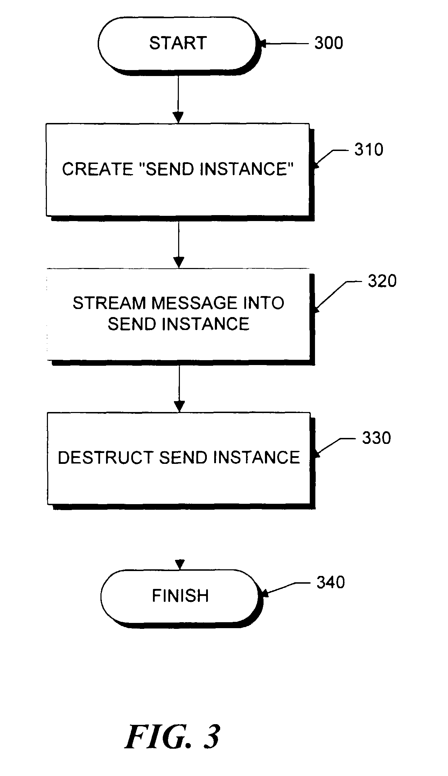

The operation of sending a message using the Caucus Framework is shown in Figure 3. The operation starts at step 300 and immediately proceeds to step 310, where a Send Message instance is created from the TCaucusSendMessage class. As part of constructing the Send Message instance, the identity of the Caucus member is retrieved from the Member instance and stored in the Send Message instance to identify the sending member. In addition, the message type is included in the message. As will be further described below, messages may be "join," "leave," "data," "pause," or "resume" messages. The type included depends on the member function being invoked to create the message. For example, if leave or join member functions of a Member are invoked, the corresponding type is automatically included in creating an associated message to the caucus. In step 320, the client application streams message data into the Send Message instance. After streaming, the Send Message instance is destructed in step 330, which causes the message to be sent to all Caucus Members. The operation ends with step 340.

The message is sent to all members of the caucus, including the sender. If desired, the client, or more particularly a read thread, can detect its own messages by comparing the sender identity of the message with its own Caucus identity, stored within its TCaucusMember object.

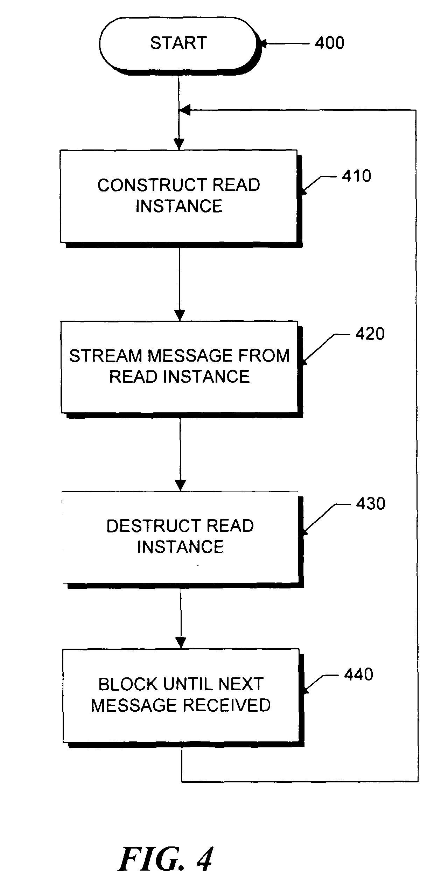

To receive messages, a client, or more particularly a read thread associated with the client, repeatedly constructs instances of a TCaucusReceiveMessage class. The message is streamed from the instance, and the Receive Message object is destructed. The operation of receiving a message is illustrated in Figure 4. The operation is started in step 400 and proceeds to step 410, where an instance of TCaucusReceiveMessage is constructed. After construction, the message is streamed from the TCaucusReceiveMessage instance in step 420. After streaming the message from the TCaucusReceiveMessage instance, the instance is destructed in step 420. After destruction, the process is repeated by blocking until the next message is received in step 440. When a message is received the operation unblocks and proceeds to step 410, where the above steps 410-440 are repeated.

Caucus members may leave a caucus explicitly, by invoking a leave caucus member function of the TCaucusMember subclass. The leave caucus member function creates and sends a leave message to the caucus. The leave member function is defined by parent class TCaucusMember and is intended to notify all members of a caucus that a member is leaving. Subclasses override this member function with their own logic, but are envisioned to include logic to transmit a leave message to all caucus members. It is up to the client to interpret this message and take any associated action. For example, many applications may simply record and report to the client the fact that a user left. Other applications may trigger more substantive actions upon such a leave operation.

Members may also leave implicitly. This occurs if an instance of the TCaucusMember subclass leaves scope or is otherwise destructed, e.g., the application program terminates. The TCaucusMember subclasses should ensure that their destructor member functions, in turn, invoke the leave member function so that members are notified.

The above description summarizes the so-called interface classes and objects of the Caucus Framework. The interfaces classes interact with the clients. Application developers who create client code need only understand the Caucus Framework to the extent of using the above-outlined interface classes, that is, creating Read, Send, and Member instances, as well as invoking the appropriate member functions thereof. The application developer need not understand the implementation details of the interface classes, and in fact, this is a key advantage of the invention. By using the above summarized classes, the implementation details of the interface classes, as well as the underlying agent classes discussed below, are hidden from the client code. Because they are hidden, the client code - by design - can have no design dependencies on the implementation details of the interface and agent classes of the Caucus Framework.

As stated above, each client becomes a caucus member by creating an instance from a concrete subclass of the TCaucusMember class, which is defined as follows.

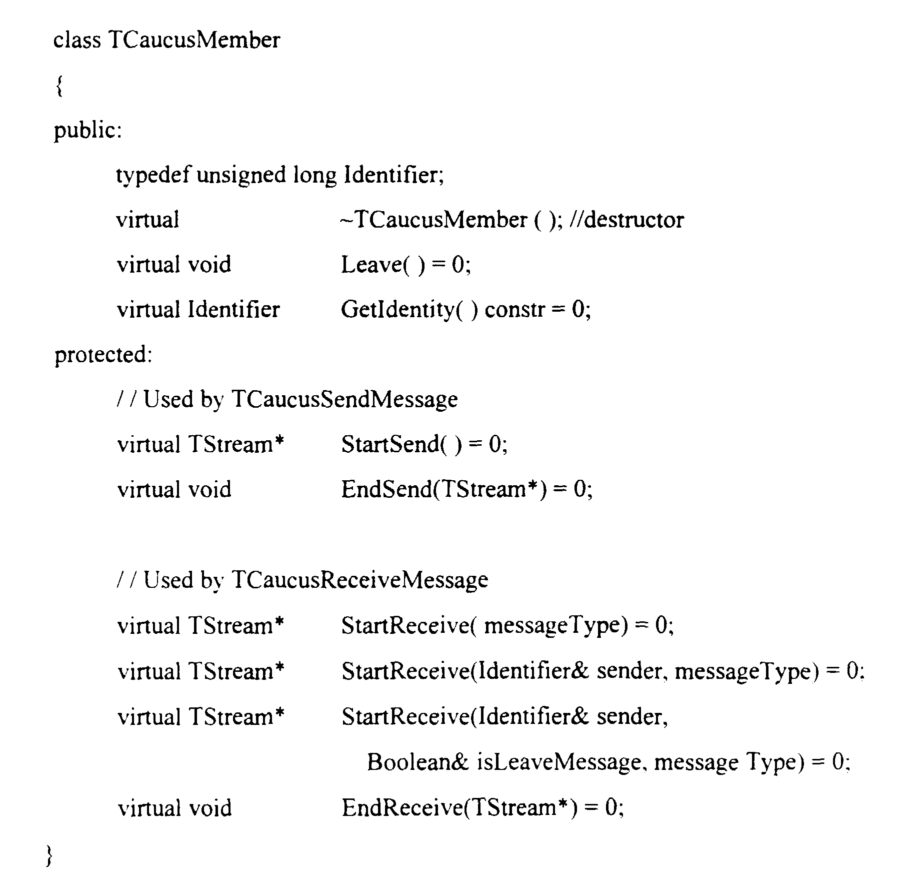

StartSend() and EndSend() are used by associated instances of TCaucusSendMessage (or instances of a subclass thereof). StartSend() is called by the constructor member function of the Send Message instance. StartSend returns a pointer to a stream object, TStream, to which the Send Message instance should stream data. The Send Message instance streams data to this stream object in response to a streaming operation, described below. The send message's destructor member function calls EndSend(), passing a pointer to the stream object . EndSend() then triggers logic to send the stream object to the caucus service that the Member instance was constructed with, i.e., the service reference passed as a construction parameter for concrete subclasses of TCaucusMember.

The StartReceive() and EndReceive() member functions operate analogously, but only to receive messages. Application developers may choose between three constructors depending on the application's needs. The first constructor is used when only data is desired: the second when the data, the sender's identity, and the message type are required; and the third when the data, the sender's identity, and the message type are required, along with an indication of whether the sender is leaving the caucus.

The TCaucusSendMessage class is defined as follows.

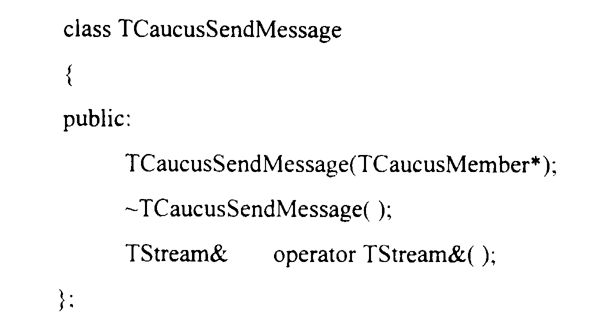

To send a message, the following exemplary code sequence may be used.

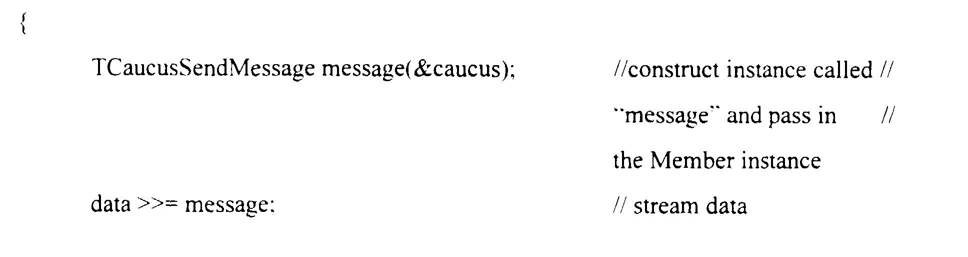

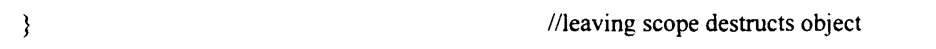

The constructor is passed a pointer to the associated Member instance. The destructor of TCaucusSendMessage causes the message to be sent to the caucus service, as described above. As will be explained below, the caucus service will then broadcast that message to all members.

The TCaucusReceiveMessage class is defined as follows.

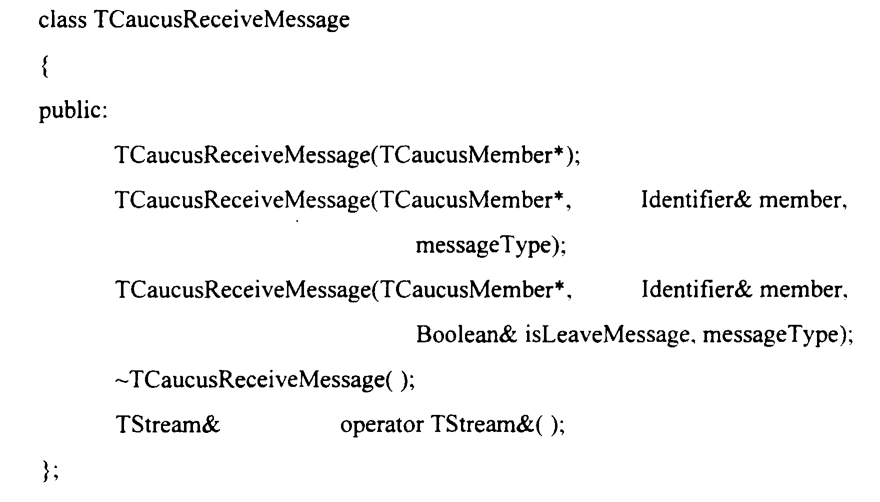

As shown, a preferred embodiment includes three constructors. The first receives a message, but does not identify the sender. The second receives the message, identifies the sender and identifies the message type. The third receives the message, identifies the sender, identifies the message type, and indicates whether the message is a "leave" message. The application developer will choose between the constructors as needed by invoking the constructors with the appropriate parameters. Each constructor uses a corresponding StartReceive(), described above.

As stated above, the semantics of a message are application dependent. The Caucus Framework provides no mechanism for interpreting a message, and instead leaves interpretation to the clients. Consequently, clients are free to read all or none of the data, or to read just enough data to realize that the remainder of a message is not of interest.

The Caucus Framework detects several exceptions. Each of these exceptions is detected by the framework and thrown to the members upon detection. (The general concept of throwing an exception is known). Among the exceptions detected by the framework are
(A) that the client who attempted to send a message is not in the caucus;
(B) that the request to create a desired caucus was not performed because it already exists;
(C) that a member couldn't join a caucus, because the caucus finished or crashed;
(D) that the caucus protocol version is too old; and
(E) that the caucus protocol version is too new.

Exception actions may be overridden by application developers but standard, default logic is provided by the framework to inform members of the exception. The meaning of the exceptions is summarized below.

Caucuses are closed; that is, only caucus members are allowed to send and receive messages. If a non-caucus member attempts to use send or receive messages exception (A) is detected and thrown.

If a client attempts to create a caucus that already exists, that action is detected and thrown with exception (B).

Sometimes, a member cannot join a caucus because the caucus has already finished, e.g., closed, the caucus is unreachable for some software or hardware reason, or the caucus has crashed. In such event, exception (C) is detected and thrown.

The last two exceptions. (D) and (E), are used for version control purposes to ensure that a member is not using software that is too old or too new in relation to other members.

The inventive Caucus Framework also includes a concrete, member class, TStandardCaucusMember, derived from TCaucusMember. Like any other subclass, TStandardCaucusMember inherits functionality from its parent, in this case TCaucusMember. In addition, TStandardCaucusMember supplements the definition of the parent by providing explicit creation constructors as well as providing pause and resume member functions, as the following class definition illustrates.

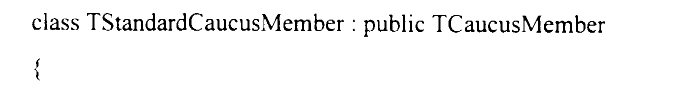

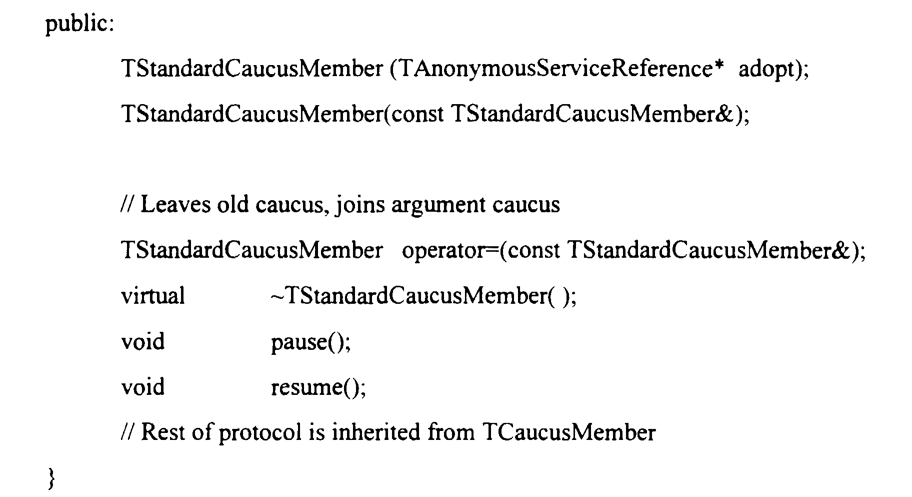

As shown above, the creation constructor for TStandardCaucusMember requires a reference to a service. As will be explained below, the overarching application will provide a mechanism so that a reference to a caucus service (more below) is passed in as the reference parameter. As is known, services are first "published," after which software may use them through service reference instances. Thus, the above class definition implies that the caucus service must first be created and published before any member instances may be created. An illustrative embodiment of the TStandardCaucusMember class is included in Appendix A.

During instance construction, a Member adopts the caucus service on an anonymous basis. (The general concept of adoption and anonymous services is known. In short, adoption entails a software's ability, by exploitation of polymorphism, to use objects or services of which the adopting software has no knowledge).

The pause() and resume() member functions of TStandardCaucusMember may be used by clients to synchronize a caucus. The use of these member functions is application dependent, of course, but they operate as follows. When a client invokes pause() on its Member instance, the Member instance constructs and sends a pause message to the caucus. As will be further described below, the pause message is sent like other messages, i.e., there is no way of *ex ante* determining when it will be broadcast by the caucus. However, once the pause message is broadcast by the Caucus, the Caucus will pause and not broadcast any other messages by any other members, until a resume message is received from the pausing member. In the interim, any messages sent by clients will be queued by the caucus. In this fashion, a client can assure that a message is synchronized as follows. The client sends a pause message and then waits for it to be echoed from the caucus. Once it detects the echo, the client knows that all members have received the pause message and that any messages sent after the pause is broadcast are internally queued by the Caucus. The client may then invoke resume() to cause a resume message to be sent to the caucus to free the queues.

The remainder of the behavior of a TStandardCaucusMember instance, such as the start and end streaming functions and identity functions, are inherited from the TCaucusMember parent class.

Thus far, the description has focused on the interface classes. Instances of the interface classes communicate with the clients on one end, and interact with agent objects, created from the Caucus Framework, on the other end. The agents, for the most part, are hidden from the clients, and are responsible for handling much of the underlying broadcasting mechanics, described above, and for assigning identity values.

More particularly, the Caucus Framework provides an agent class,
TStandardCaucusTransponder, from which a Transponder agent may be created. Clients have no direct interaction with the Transponder, i.e., they do not invoke any of its associated member functions. As will be further described below, the overarching application minimally interacts with the Transponder, e.g., creating it, starting it, stopping it, and deleting it.

An instance of a TStandardCaucusTransponder class, cooperates with instances of the above-defined TStandardCaucusMember class and the Send and Receive Message classes. Either the application program or some other higher level protocol is responsible for creating the Transponder instance. As stated above, a preferred embodiment requires an instance of TStandardCaucusTransponder before members can join the caucus.

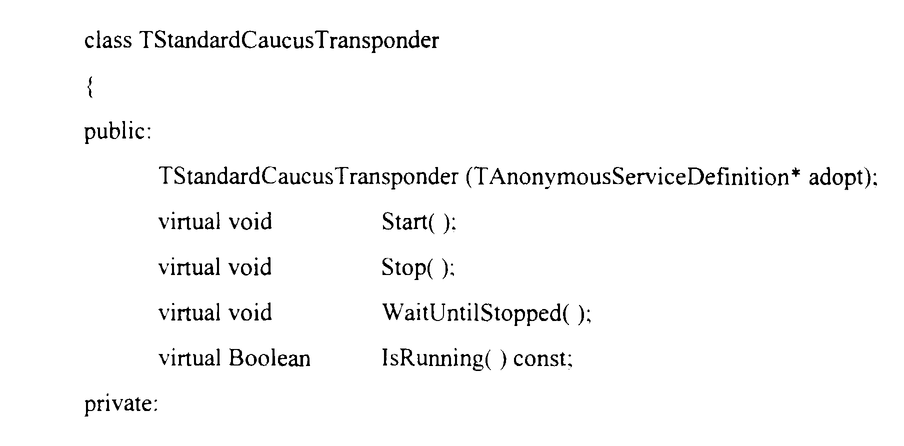

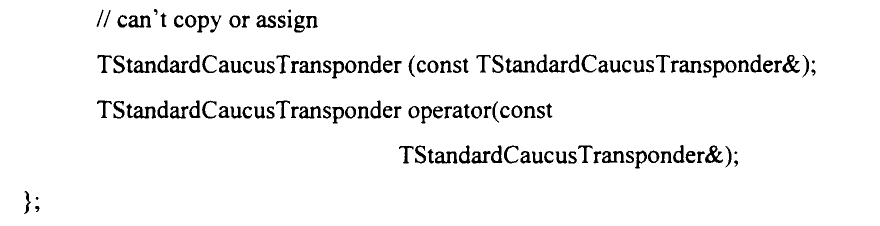

As shown, the Transponder must be creation constructed with a service definition that is adopted by the transponder. The overarching application is responsible for determining the service definition to be used with the Caucus Transponder. The service definition used will eventually define a networking service to communicate on a network, having TCP/IP, for example. The application need not understand any networking mechanics in any detail, because the application uses the network service on an anonymous basis and thus is abstracted from knowing the actual details of the service. The CommonPoint Application System, for example, includes mechanisms for providing network transport mechanisms, as well as other services, as anonymous service definitions and references.

The Transponder instance created from the Transponder class includes a registry for managing identities. Among other things, the registry assigns unique caucus identities to new members and removes identities for "leaving" members. The registry holds these identities and the network locations for each identity in a data structure. The registry further includes logic for checking the identity of a sender against the registry to ensure the caucus is closed. A preferred embodiment uses a unique identity service provided by the Foundation Services of the CommonPoint Application System.

The transponder further includes logic for causing any messages received by the Transponder from a member to be broadcast to all registered identities, including the sender. To do this, the Transponder utilizes the service definition it was constructed with, which defines an underlying network transport mechanism. A preferred embodiment includes logic that iterates through the registry and sends the received message to each caucus member. The overall architecture, however, allows for "smart" subclasses that recognize that the service definition provided is to a network service that supports multicast functionality. These smart subclasses would then include logic to issue network multicasts to the caucus members (i.e., a multicast from the network's perspective because it is only going to a subset of network users, but a broadcast from the caucus perspective because it is going to all caucus users.) The transponder logic detects whether some messages sent to caucus members were not received, e.g., no acknowledgment, and if so informs the registry that member is lost, so it can be removed from the registry.

The transponder also includes pause and resume logic to pause and resume the caucus, as described above. The Transponder detects a pause message as it is being broadcast. Upon detecting such a message, it internally queues all messages from being broadcast until it detects the reception of a resume message from the member who issued the pausing message. Applications may use this facility to synchronize the collaborative application using the caucus.

There is no mechanism within the caucus protocol itself for starting and stopping the caucus. Rather, the overarching application that uses the Caucus Framework is responsible for starting and stopping the Transponder instance. Creation of a transponder object does not start the caucus. Rather, an explicit start member function must be used to trigger the caucus into a start state to process messages and the like. Similarly, an explicit stop member function is used to stop the caucus. If a transponder object is destructed, the caucus is first stopped and then destructed, i.e., the destruction operation insures that the stop operation is invoked.

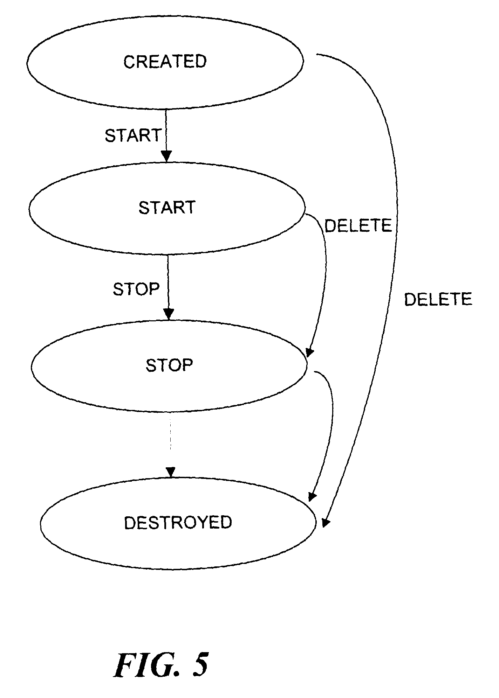

The above operation is illustrated with the state diagram of FIG. 5. Once the caucus is started, clients can connect to the caucus by creating TStandardCaucusMember objects, as described above. When a caucus is stopped, all caucus members are notified via the exception mechanism discussed above, in particular exception (A). Once stopped, the transponder may not be started again.

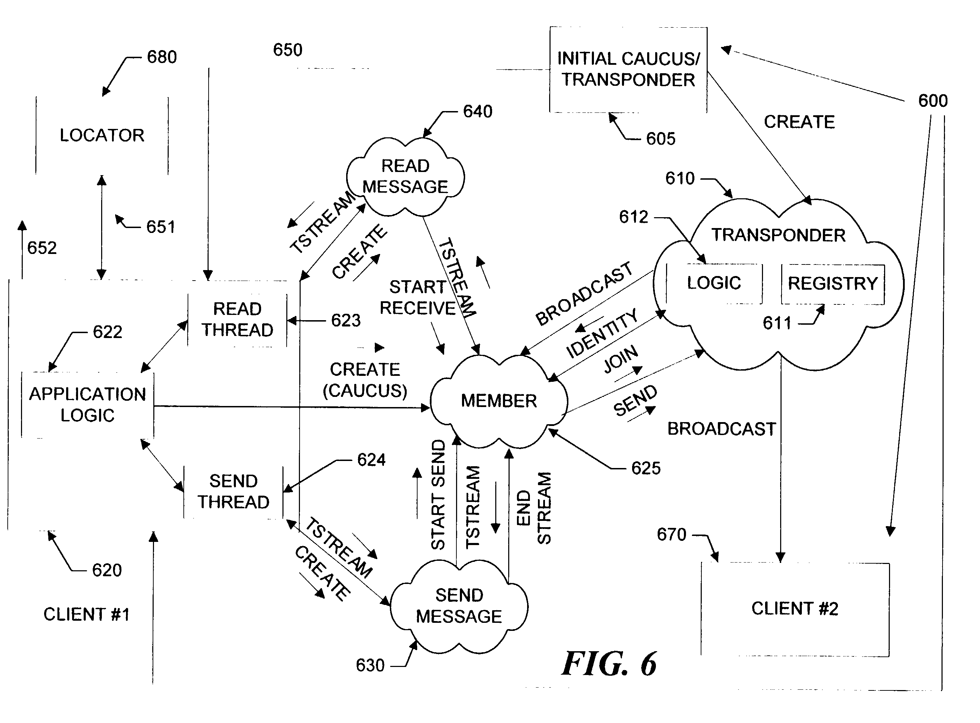

The overall architecture of an application program using the Caucus Framework is illustrated in Figure 6. The application program 600 comprises initialize caucus/transponder logic 605 and clients 620 and 670. These aspects are entirely application dependent. The application 600 further includes Member instance 625. Send Message Instance 630, Read Message instance 640, and Transponder agent instance 610, as well as any corresponding instances associated with other clients, e.g., 670. These instances may be completely dependent upon the Framework, or they may be partially dependent on the application 600, if the application has created subclasses from the framework classes and used these subclasses in creating the above-listed instances. The above instances are considered part of the application in that the instances reside in application address space of computing system (at least the instance-specific portions, such as object attributes, reside there).

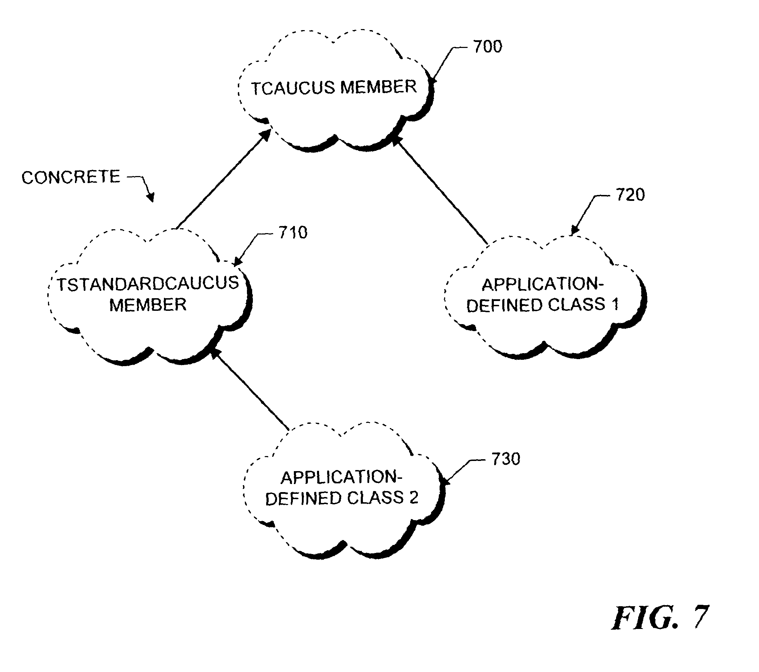

The Caucus Framework provides the classes and concrete subclasses that are used to create the above instances. The class definitions and base line behavior are provided by associated class libraries and framework logic (e.g., 210 and 220 of Fig. 2) Figure 7 illustrates a class hierarchy for the Member classes. Abstract base class TCaucusMember was described above as was framework-provided, concrete subclass TStandardCaucusMember 710. As shown, applications may provide their own subclasses such as 720 and 730.

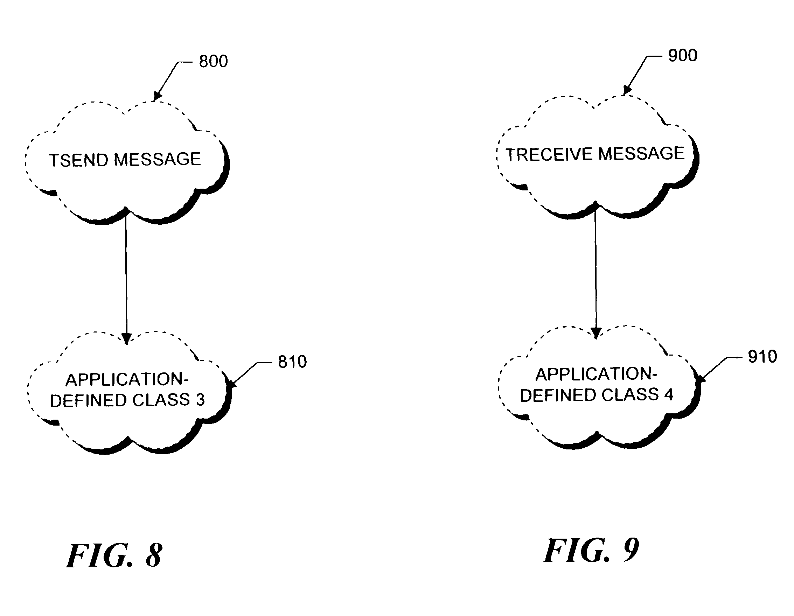

Figure 8 shows the class definition for TSendCaucusMessage 800. As shown, applications may develop and provide their own Send Message instances 810. Similarly, Figure 9 shows an analogous structure for Read classes 900 and 910.

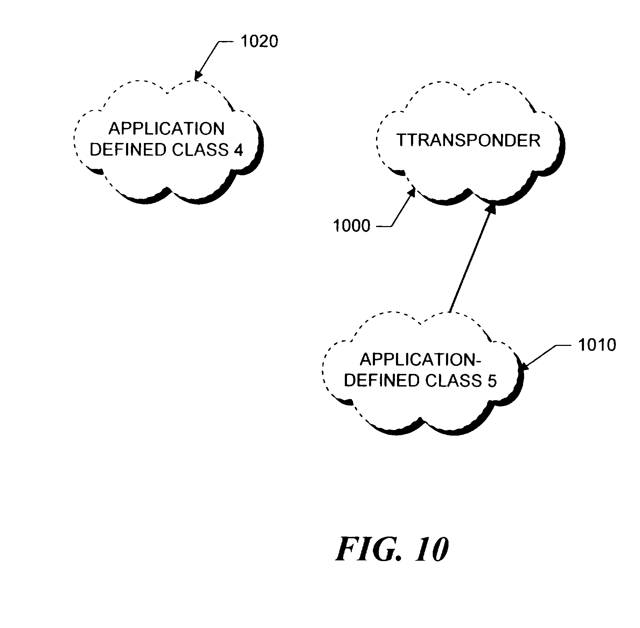

Figure 10 illustrates a hierarchy for the Transponder classes. The Framework provides a concrete class 1000, TStandardCaucusTransponder, described above. Applications may subclass from this 1010, or alternatively, provide their own Transponders from scratch 1020.

The interaction of the application and framework are now described, with reference to Figures 6-10. Init logic 605 creates a Transponder 610 from one of the Transponder class definitions 1000-1020. As part of the construction, a service definition to an underlying network transport mechanism is passed into the creation constructor for the Transponder classes. For example, known locator services may be used to locate such a network service. If the framework provided class 1000 is used, the Transponder 610 will include a registry 611 and logic 612 described above. The Transponder 610 is created before any clients 620 and 670 can create Member instances 625. In a preferred embodiment, as part of the overall construction operation of the Transponder 610, the Transponder is published as a service for use on the computing system.

Client 620 comprises application logic 622, read thread 623, and write thread 624. The client logic 622 implements the semantics of the client. Exemplary read thread 623 and write thread 624 are discussed above textually and shown below in an exemplary program. Threads 623 and 624 are application-dependent and not part of the Caucus Framework.

The application logic 622 includes logic for creating a Member instance 625, in a memory of the computing system upon which the client executes, from one of the Member classes 710-730 (Fig. 7). As arrows 650-2 indicate, logic 622 may invoke the init logic 605 , a locator service 680, or use some other mechanism ? to identify the caucus to which the client is to be a Member 625. (Locator services 680 are known). Once the Caucus service is identified, it is passed as a service reference parameter in constructing the Member instance 625.

As part of the construction operation, the Member instance's 625 constructor sends a join message to the identified Caucus service 610. In addition, the Member instance 625 receives from the Transponder a unique caucus identity, which is stored in the Member instance 625 and accessible to logic 622, if needed.

As described above, a send thread 624 includes logic for creating Send Message instances 630 from a Send Message class definition, such as 800 or 810. The constructor of the Send Message instance is passed a parameter identifying the Member instance of interest and invokes the StartSend() member function of Member instance 625 to receive information identifying a stream object on which it may stream data. The combination of logic 622 and thread 624 then stream data into Send Message instance 630. Afterwards, the Send Message instance 630 is destructed. As part of the destruction operation, the Send Message destructor member function invokes the EndSend() member function of Member instance 625. This causes a pointer to the stream onto which data has been streamed to be passed to Member instance 625. EndSend() then sends the message, i.e., the stream object it was just passed, to the Caucus service 610, i.e., the Transponder layered on top of the network service.

The Transponder 610 includes a registry 611 and transponder logic 612. The registry 611 creates unique identities, in response to member join requests and stores the identity and the member's network location in a data structure within the registry 611. The logic 612 receives messages from Member instances 625 and broadcasts them to all Members in the registry. This logic includes the pause and resume functionality discussed above, which allows caucus members to synchronize.

As stated above, the Caucus Framework is a tool for application program developers. To help illustrate the use of the Caucus Framework, an illustrative chat program is shown below. This program allows Each caucus member to send messages to the group and echoes every message sent to the group by anyone in the group.

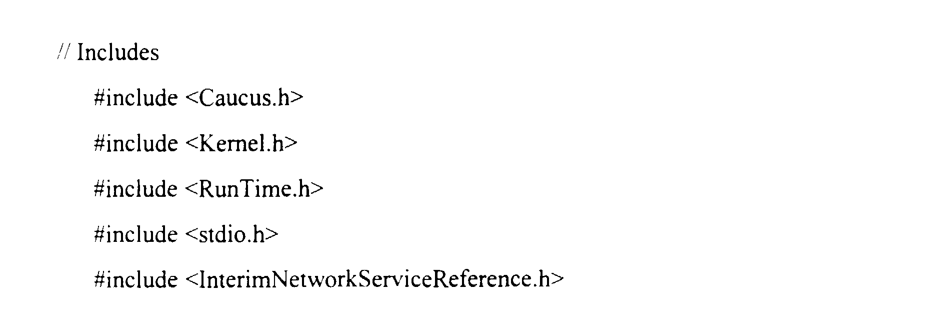

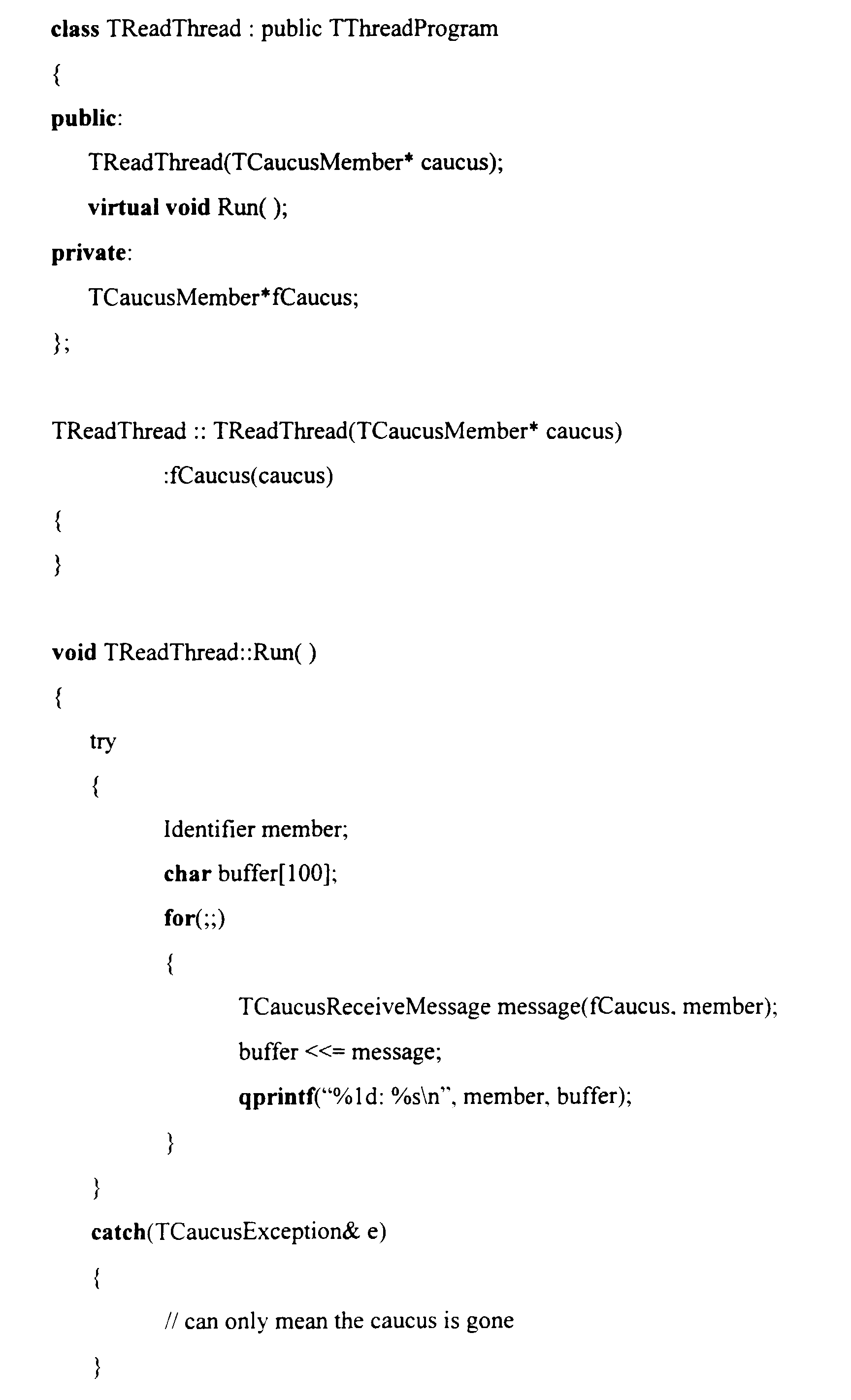

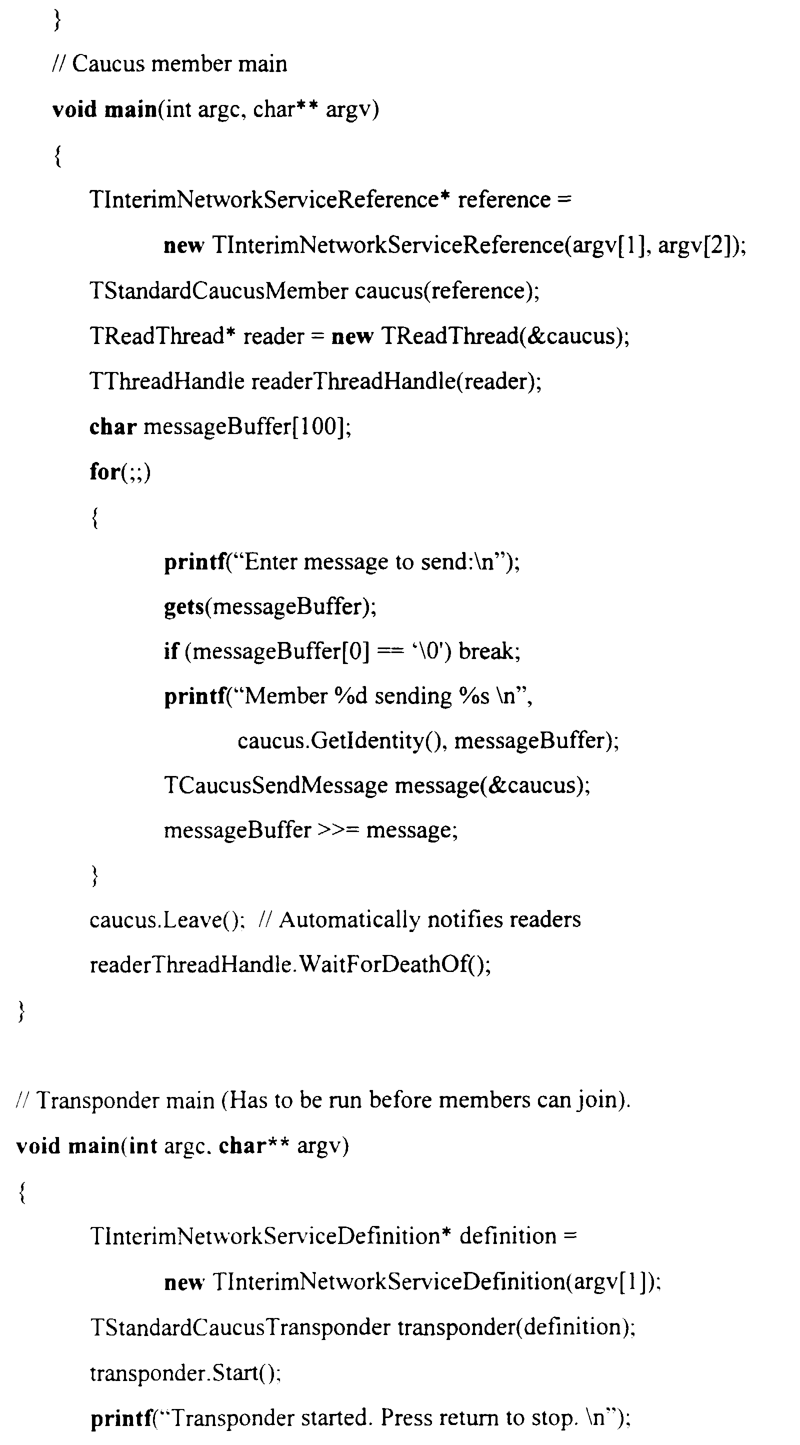

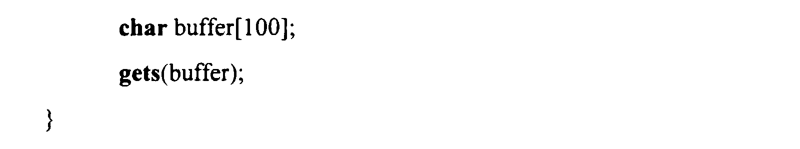

The Caucus Framework provides a set of interrelated interface and agent classes, which provide application programs the ability to have clients communicate with each other according to a reliable, closed, network-independent, globally-ordered broadcast. "Closed" means that only caucus members receive the broadcast and only caucus members may send to the caucus. "Globally- ordered" means that each caucus member receives the same sequence of messages that are broadcast by the caucus. The Caucus Framework does not interpret the content of any messages transmitted via the caucus. Instead, any meaning is supplied by the application's interpretation of the broadcast.

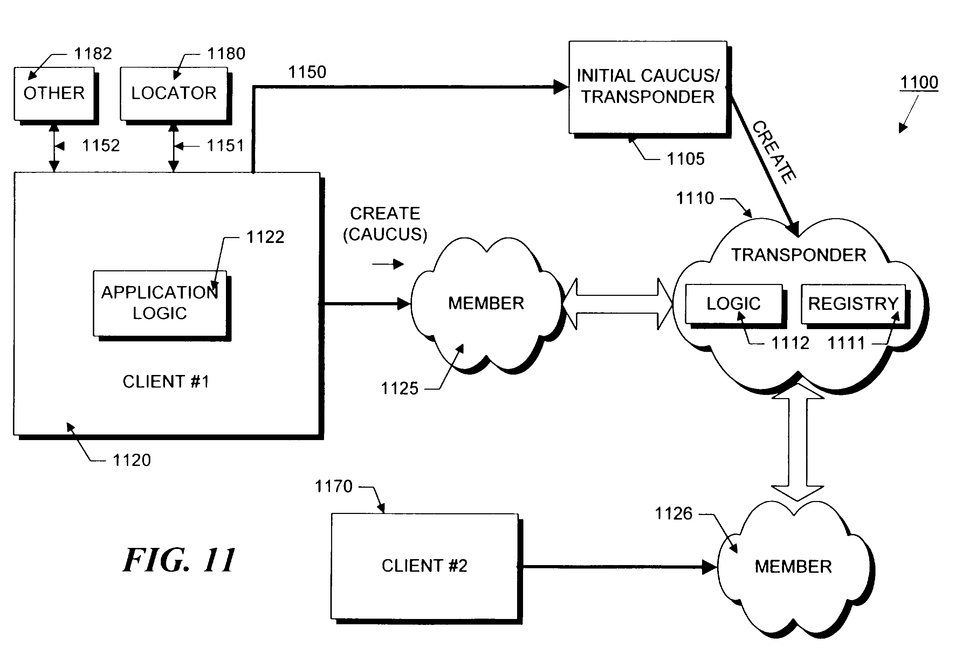

The overall architecture of a hypothetical system using the Caucus Framework is illustrated in Figure 11. The overarching hypothetical system 1100 includes initialize caucus/transponder logic 1105 and clients 1120 and 1170. The system 1100 further includes Member instance 1125, and Transponder agent instance 1110, as well as any corresponding instances, such as Member instance 1126, associated with other clients, e.g., 1170.

The clients 1120, 1170 and the initial caucus logic 1105 are application dependent. For example, as will be further explained below, the clients 1120 and 1170 may be collaborating editing applications. Each client uses the caucus and interprets the messages broadcast by the caucus.

The Member and Transponder instances are used by the application, but are at least partially Caucus Framework dependent, as their eventual image is dictated by the class definition provided by the Caucus Framework. These instances are considered "part of" the overall system in that they reside in the system's address space (at least the instance-specific portions, such as object attributes, reside there). This system address space might, for example, be the address space of the operating system. The Member instances, 1125 and 1126 are found in the application address space of a particular client, e.g., 1120 or 1170, and the Transponder instance 1110 is found in the application address space of the init caucus logic 1105, in the above example.

As outlined above, these instances may be instantiated from classes provided by the Caucus Framework and thus be completely dependent upon the Caucus Framework. Alternatively, these instances may be instantiated from application-defined subclasses of the Caucus Framework classes, in which case they are partially dependent on the overall system 1100 and partially dependent on the Caucus Framework. The class definitions for the Caucus Framework provided classes exist in system libraries, residing in the system address space of the machines having the clients, e.g., 1120, and the init logic 1105. For example, the class definitions might reside in class libraries 220 of Figure 2.

Each of the clients 1120 and 1170 contains application logic which controls the operation of the client. For example, client 1120 is illustrated as containing application logic 1122. As arrows 1150-2 indicate, application logic 1122 may invoke the init logic 1105. using a conventional locator service 1180, or use some other mechanism 1182 to identify the caucus to which the client will be a member. That is, the Caucus Framework does not dictate or constrain how the existence of the caucus service is communicated to the clients.

Init logic 1105 creates a Transponder instance 1110 from a TStandardCaucusTransponder class definition, for example. As outlined above, the transponder manages caucus identities, receives messages from the members, broadcasts messages to all caucus members in global order, and pauses and resumes the caucus. The application logic also constructs the Member instance 1125. The identified Caucus is passed as a service reference parameter in constructing the Member instance 1125 in a memory of the computing system upon which the client executes, from the TStandardCaucusMember class, for example.

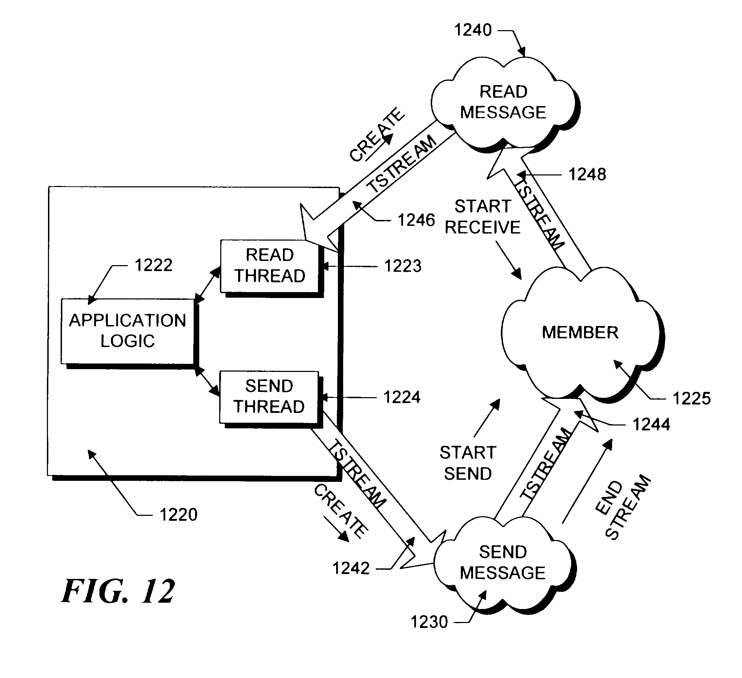

As illustrated in Figure 12, a client 1220 typically includes, in addition to the application logic 1222. a read thread 1223, and a send thread 1224. The logic 1222 implements the semantics of the client by, among other things, interpreting messages broadcast by the caucus. The send thread 1224 includes logic for creating Send Message instances from a TSendMessage class, for example.

A Send Message instance, such as instance 1230, cooperates with the Member instance 1225 to send messages to the caucus agent, i.e.. Transponder 1110 (Figure 11). In particular, the send thread 1224 creates a Send Message instance 1230 and then streams data to it via a TStream data stream 1242. As discussed in the aforementioned patent application, the send thread then destroys the Send Message instance 1230 and the destructor of the Send Message instance 1230 streams the data to the Member instance 1225 via a TStream object 1244.

Likewise, the read thread 1223 creates Read Message instances. Each Read Message instance, such as instance 1240, operates with the Member instance 1125 to receive messages that are broadcast from the Member instance 1125. For example, read thread 1223 creates Read Message instance 1240 into which data is streamed, via TStream object 1248. Read Message instance 1240 is then destructed and the destructor streams the data via TStream object 1246 to read thread 1223.

### III. The Shared Document Framework

The inventive Shared Document Framework allows application programs, using the Framework, to construct and manipulate documents, such as compound documents, to not only be shared by multiple users but to be collaboratively accessed by multiple users, interactively and in real-time. Each collaborator may make changes to the shared document, and have those changes automatically reflected to the other collaborators; that is, each collaborator sees the changes made by another collaborator as the changes are being made (if both collaborators are observing the same portion of the document.) To do this, the Shared Document Framework of a preferred embodiment utilizes the Caucus Framework, summarized above, along with particular aspects of the CDF.

In short, the Shared Document Framework provides support mechanisms for the following model of collaboration. Each collaborator receives a replicated copy of the document that is being shared and operates on it locally. The received copy is in synchronism with all other copies. Any commands that can change the state of the document are broadcast to all collaborators in global order, at which time the collaborators apply the commands to their associated local, replicated copies. Because each collaborator starts with a copy of the document that is in synchronism with the others, and because each collaborator applies an identical sequence of commands to their local copy, each collaborator remains in synchronism with the others.

More particularly, the material aspects of the TCompoundDocument class definition, from which shared document instances are created, are defined below. The TCompoundDocument class includes other interface member functions, which are known, but these aspects of the class definition are immaterial to understanding the instant invention.

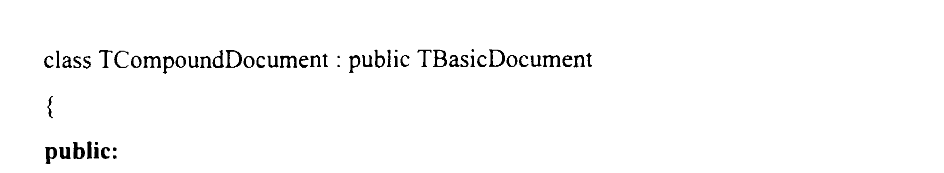

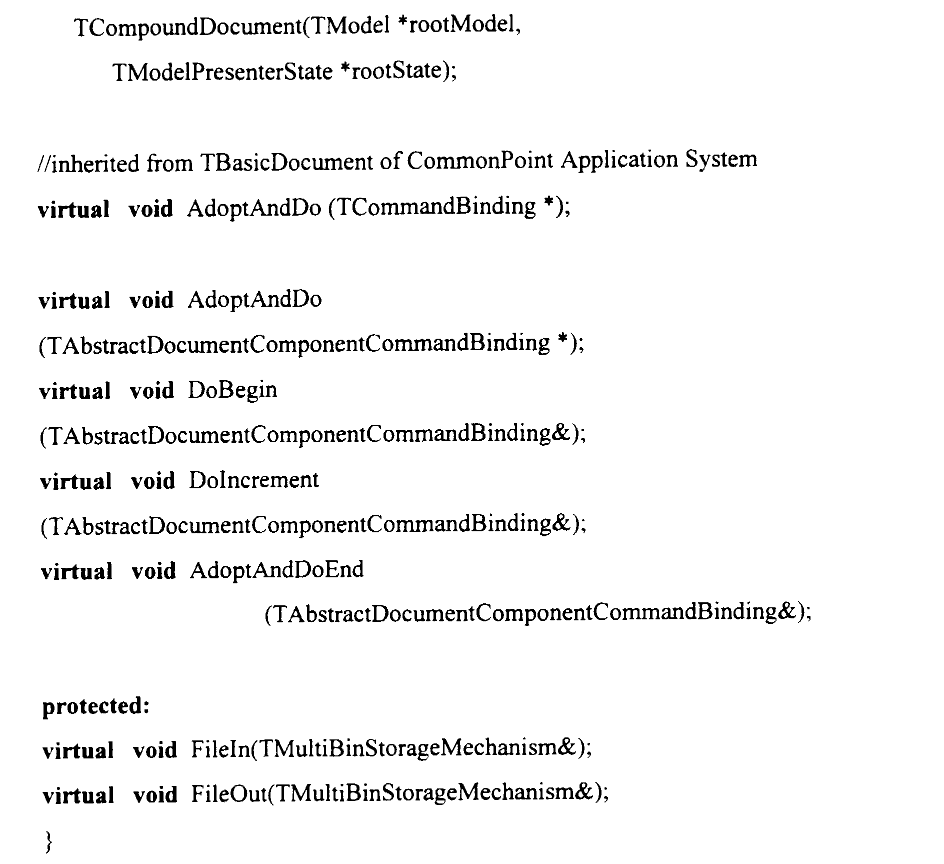

The Fileln and FileOut logic are described below, followed by a description of the command processing aspects. In short, the FileIn and FileOut logic are responsible for retrieving and storing a local replicated copy of the document that is being shared. The command processing interface works with associated agents to ensure that commands are globally broadcast to each collaborator.

More specifically, the Fileln() member function includes logic to create a shared document instance that is associated with a file. As part of an "open file" operation, the client code first creates an instance of TCompoundDocument, locally, and then invokes the Fileln member function with a desired file name.

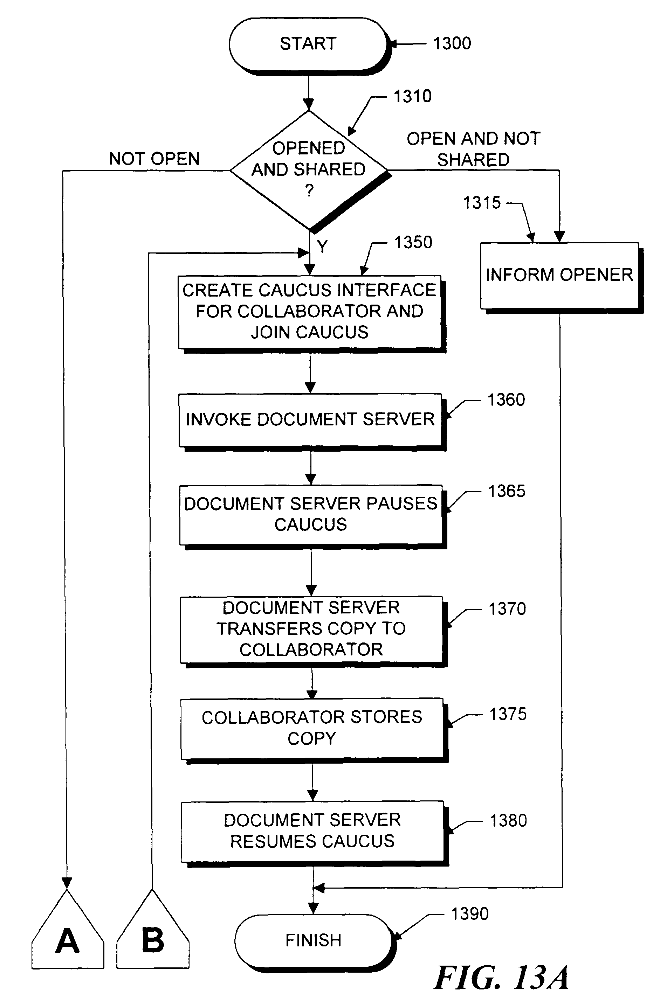

Referring to Figures 13A-B, the Fileln logic starts at step 1300 and proceeds to step 1310 where it determines whether this shared document is already opened by another and in sharing mode.

If the file is opened but sharing mode is disabled, the FileIn logic proceeds to step 1315 where it informs the client that the file that it is opened in non-sharing mode. The logic then proceeds to step 1390, which ends the process.

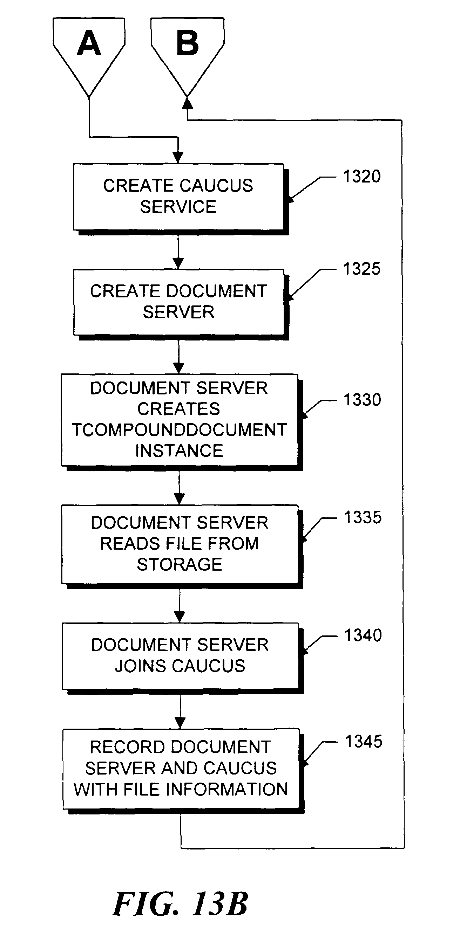

If the file is not open yet, the logic proceeds to step 1320 (Fig. 13B), where a caucus service is created. As discussed above, this involves creating a transponder agent and publishing it on the computing system as an available service. Locator services or similar mechanisms may be used to identify a network transport service to pass in as a service definition to create the transponder agent. The logic proceeds to step 1325, where a document server is created. The document server includes conventional file transferring logic for reading files from storage and for sending copies of files over a network, if necessary. The document server also includes logic for interacting with compound document instances, as will be further described below. The logic proceeds to step 1330 where the document server creates an instance of TCompoundDocument. Then, in step 1335, the document server reads the requested file from storage into memory, using conventional techniques. This is the "original" copy of the document. In step 1340, the FileIn logic creates the necessary caucus interface instances for the Document server and causes the document server to join the caucus. In step 1345, the caucus service and the document server are recorded with the file information, residing on the computing system. The logic then proceeds to step 1350 (Fig. 13A), which is also the starting point for requests to open a file that is already open and in sharing mode (as detected by step 1310).

In step 1350, the FileIn logic creates the necessary caucus interface instances for the collaborator, i.e., the application opening the file, and causes the collaborator to join the caucus. The caucus service was previously stored with the file information (step 1345), and this is used to create the necessary service references to create the Member instance, for example. Creating the interface classes causes the collaborator to join the caucus.

In step 1360, the logic causes the document server to be invoked to request a copy of the document. In step 1365, the document server pauses the caucus using its member instance's pause() member function, thus stopping any updates to the document as commands are paused from being broadcast.

In step 1370, the document server transfers a copy of the original document to the collaborator using conventional file transfer techniques. In step 1375, the collaborator stores the copy locally, thus making a local, replicated copy of the document associated with its local instance of TCompoundDocument. (This instance was created by before invoking the Fileln logic as discussed above; i.e., the Fileln() logic cannot be invoked until the TCompoundDocument instance is constructed).

After the document server has transferred the document, the document server resumes the caucus, in step 1380, by invoking the resume() member function of its Member instance. The logic ends in step 1390, at which point both the collaborator and the document server are registered caucus members and at which point both the collaborator and document server have copies of the document that are in synchronism. Each is ready to receive and apply commands, as will be discussed below.

Moreover, as is seen in the logic branch starting at step 1350, any subsequent members are assured of receiving a replicated, synchronous copy of the document, even if changes are made to the document before the subsequent member opens the shared document. The subsequent member will attain a local copy including any of the changes made by the session, as the document server updates the original with any of the changes.

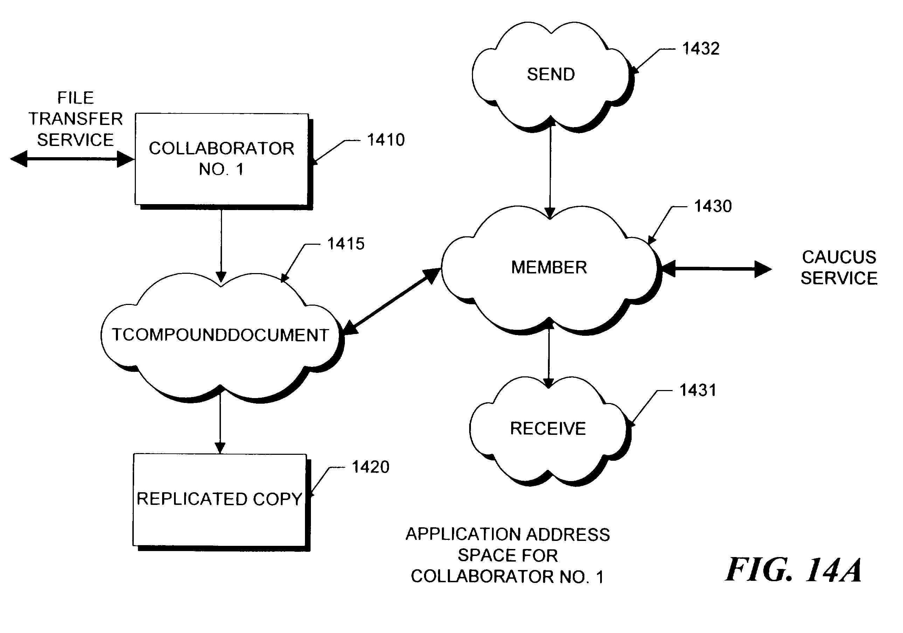

Figures 14A-C illustrate an exemplary state of the computing system after two collaborators have opened the shared document. Referring to Figure 14A, first collaborator 1410 has a local replicated copy 1420 of the document, with which collaborator 1410 interacts, via the interface defined by TCompoundDocument instance 1415. Instance 1415 includes logic for transferring files with a file transfer service, and collaborator 1410 includes caucus interface instances 1430-2 for communicating to the caucus. These entities reside in the application address space for the first collaborator application.

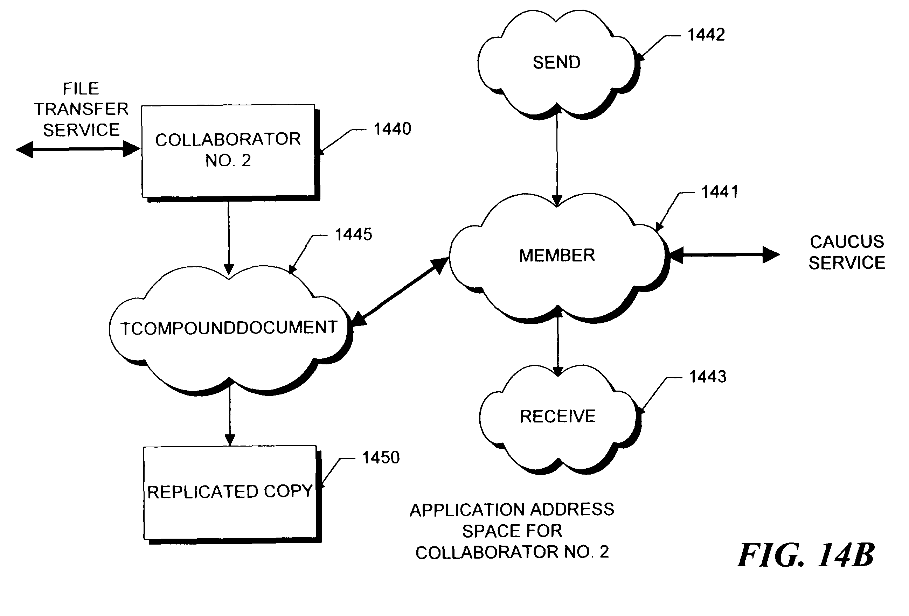

Figure 14B illustrates an identical arrangement for the second collaborator 1440. These entities, however, reside in an application address space for the second collaborator. This address space may exist on the same machine as used by the first collaborator 1410 or may even exist on a different computing node of the overarching computing system. Although only two collaborators are illustrated, the collaboration may involve many more collaborators than shown above.

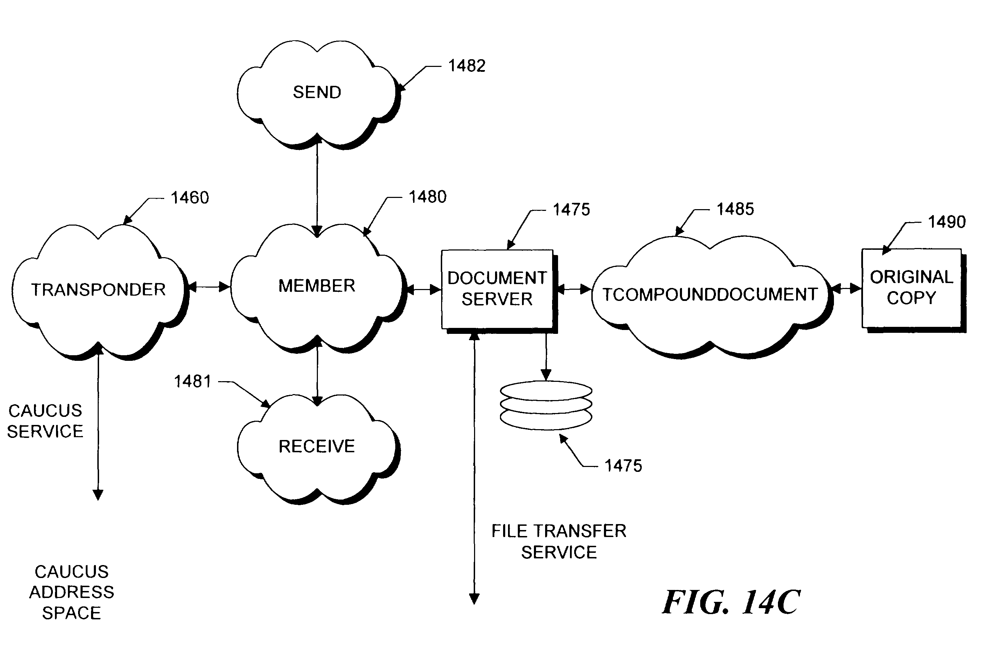

Figure 14C illustrates the transponder and document server arrangement. Transponder agent 1460 includes a member registry and broadcast logic, discussed above. Document server 1475 is a member of the caucus and communicates with the transponder 1460 via caucus interface instances 1480-2. Document server 1470 includes logic for obtaining the data for the original copy from storage 1475 and for managing the original copy of the document 1490, and communicates with copy 1490 via an instance of TCompoundDocument 1485. The Transponder 1460 is the caucus service and the document server 1490 is the file transfer service. The above components reside in a separate caucus address space.

Actual command processing and distribution may involve many details, such as command logging and other ancillary features, that are immaterial to understanding the instant invention. Those aspects that are material are discussed below.

As outlined above, command processing involves operation with command bindings which encapsulate both an action to be performed and a target for that action. The targets, in turn, may be selections, which, as outlined above, specify a portion of the compound document of interest. The selections used by a preferred embodiment are address-space and architecture-independent. This is so, because the various collaborators may reside in different address spaces, and even on different nodes within a computing system network. Each node may involve a different architecture. For example ASCII machines use 8 bits to represent one character, but EBCDIC machines use only 7 bits per character. Each machine definitely involves a different address space. Address-independent selections abstract and hide these details. Thus, selections will not use C pointers and the like, and instead will specify portions of the document relatively and abstractly, for example, "the tenth text character object through the 15 text character object."

The TCompoundDocument class provides a known, predefined command processing interface. In particular, the interface includes an AdoptAndDo(). a DoBegin(), a Dolncrement, a Do(), and an AdoptAndDoEnd() member function. Each member function is used in particular contexts, known in the art. and defined by the CommonPoint Application System. For example, the DoBegin, DoIncrement, and DoEnd member functions are used for incremental commands, such as using the cursor to drag a graphic entity, in which the command has many states resulting from the many mouse event inputs. For present purposes, the internal operation of these commands need not be understood in detail. Rather all that needs be understood is that all commands applied to a compound document are applied by passing a command binding to one of these member functions as a call parameter. Once the command bindings are passed in to the interface, the interface member functions, as stated above, may perform many ancillary functions, such as logging the command and the like.

Various aspects of the distribution of commands to each collaborator to ensure proper collaboration are discussed below. In particular, the distribution portions of the structure of the TCompoundDocument DoBegin() member function discussed above are illustrated and its operation is discussed. The other command processing member functions use analogous distribution mechanisms and are not shown.

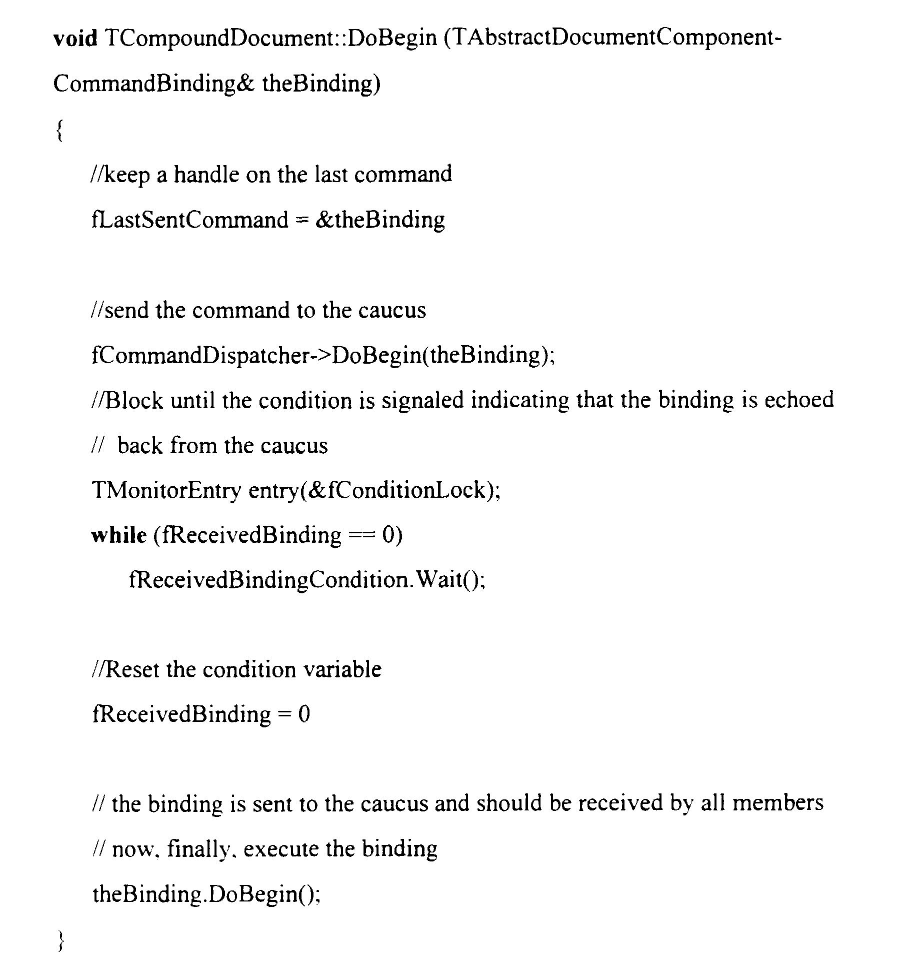

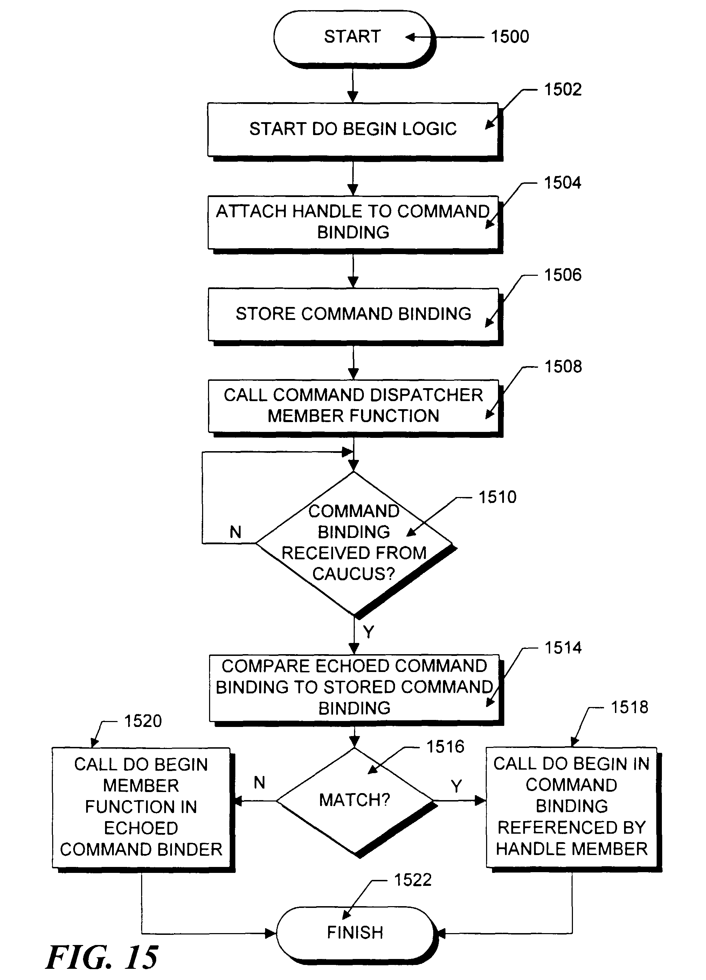

An illustrative flowchart depicting the operation of the system in processing a command binding is shown in Figure 15. The operation commences in step 1500 and proceeds to step 1502 in which the DoBegin() logic is started. In accordance with a preferred embodiment, upon receiving a command binding. DoBegin first attaches a handle to the command binding (step 1504) and stores the command binding in the local memory as shown in step 1506. The handle will be used to retrieve and process the command binding as described in detail below. After a handle is attached to the command binding, it is passed as a call parameter to a command dispatcher object, which is created during the creation of the TCompoundDocument instance. More particularly, as set forth on step 1508, the command binding is passed to a member function of the dispatcher object that mirrors the member function of the compound document; in the instant case, this member function is DoBegin(). The command dispatcher then sends the command binding to the caucus using the interface instances.

As set forth in step 1510, the DoBegin logic of TCompoundDocument then blocks until the binding is echoed back from the caucus, as is explained below. Eventually, the caucus broadcasts the command binding sent by fCommandDispatcher to all caucus members, that is, the document server and all collaborators, including the sender. When the collaborator detects that its command binding has been broadcast, i.e., echoed back, the DoBegin logic of TCompoundDocument unblocks and applies a command binding to the document by calling a corresponding DoBegin member function on the command binding.

Again, in accordance with a preferred embodiment of the invention, the echoed command binding copy is compared to the stored command binding as set forth in step 1514. If a match is detected in step 1516 (indicating that the collaborator originally sent the command binding), the routine proceeds to step 1518 where the stored command binding is applied to the local document copy by calling the DoBegin() member function on the command binding referenced by the handle. In this fashion, the stored original command binding is applied, rather than the echoed copy of the command binding. This is done so that any potential exceptions raised by this command binding may be referred to the actual binding that raised the exception. The overall collaborative functionality could operate if the command were merely dispatched, providing that the echoed copy were executed by the sender. However, if the actual command binding somehow caused an exception, by the time the exception is thrown, the actual command binding could be gone, i.e., destructed. and the exception would have no object to refer to, thus making the overall code less desirable and maintainable.

Alternatively, if no match is detected in step 1516, the routine process to step 1520 in which the echoed command binding is applied to the local document copy by calling the DoBegin() member function in the echoed command binding. The routine then ends in step 1522.

The command dispatcher object, fCommandDispatcher, is created as part of TCompoundDocument creation and. illustratively, from the following class definition:

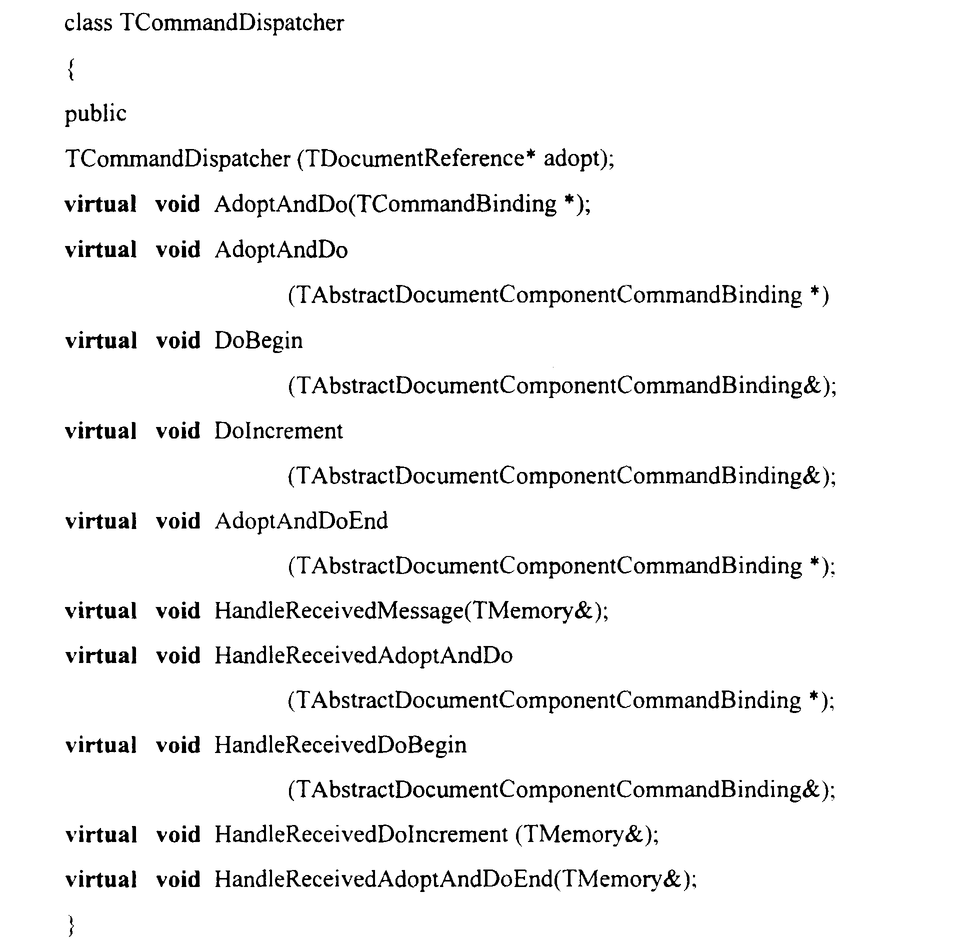

The various Do and AdoptAndDo member functions include logic for creating Send Message instances, storing the command binding therein, and sending the message to the caucus. The various Handle member functions are responsible for receiving messages from the caucus. The Handle functions include logic for creating Receive Message instances and also for performing selected filtering.

In particular, any messages received by another caucus member are applied to the document. That is, the Handle functions will include logic to execute the binding, e.g., example Binding.DoBegin(). However, any commands received by a collaborator that the collaborator itself sent (that is, the sender's identity matches the caucus member's identity) are filtered out. The Handle function will not execute these; instead, upon detecting such a match, the dispatcher will unlock the lock being monitored by the corresponding member function of TCompoundDocument. In this fashion, the member function of TCompoundDocument will unblock and execute the actual command binding, as discussed above, and the dispatcher will ignore the echoed copy, for the above-stated reasons.

Other collaborators receiving the broadcast command bindings will have their corresponding member functions apply the command binding to the replicated copy, as these commands will not be filtered out. In addition, the document server will also have its handle member functions on its dispatcher apply the command bindings to the original copy being managed by the document server.

Although the above embodiments are discussed in the context of CDF and other interrelated frameworks provided by the CommonPoint Application System, the invention itself transcends the use of these frameworks. For example, the functionality as described above could be developed from scratch rather than leveraging the frameworks provided by the CommonPoint Application System. Skilled artisans will appreciate that many obvious variations follow from the above description. For example, the invention may be extended to include commands that operate on the model and commands that affect the presentation. Presentation commands do not require the use of the command binding semantics and thus are not distributed to the caucus as part of the normal course of events. However, if application developers would like presentation and other commands to be distributed to the caucus, they need only develop new commands that take the desired commands and place them in a command binding wrapper.

## Claims

1. Collaboration apparatus for use in a computing system (100) having one or more processors (105) and one or more memories (110), the apparatus providing collaborative access during a collaboration session by a plurality of application programs (1410, 1440) to a shared document (1490) and including means (1410,1440) for creating a copy (1420,1450) of the shared document (1490) in the one or more memories (110) for each of the plurality of application programs (1410,1440), means (1415,1445) for creating a predefined document interface for each copy (1420,1450) of the shared document (1490) and means (JOIN, Fig. 6) for causing each of the plurality of application programs to join the collaboration session as a collaborator;
CHARACTERIZED IN THAT
the collaboration apparatus comprises:
(a) a transponder (1460) in the one or more memories (110) responsive to messages (640) received from each of a plurality of collaborators (1430,1441,1480) for broadcast transmitting received messages to all of the plurality of collaborators (1430,1441,1480) so that each of the plurality of collaborators (1430,1441,1480) receives the same sequence of messages;
(b) means (1432) for receiving a command binding from one of the plurality of application programs (1410) and sending a copy of the received command binding to the transponder (1460) as a message (630); and
(c) means (1431, 1430, 1443, 1441) in each of the plurality of application programs and responsive to a command binding broadcast by the transponder, for applying a command binding to the application copy (1420, 1450) of the shared document (1490) through the predefined document interface (1415, 1445) for the copy (1420,1450) to change the data therein.

2. The apparatus of claim 1 wherein the receiving means (1432) comprises means (TSendMessage, Fig 8) for storing the command binding received from the application program (1410) in the one or more memories (110).

3. The apparatus of claim 2 wherein the applying means (1430, 1431) comprises means responsive to a command binding broadcast by the transponder (1460) for comparing the broadcast command binding to the command binding stored by the storing means (TSendMessage, Fig 8) and means for applying the broadcast command binding to the document copy (1420) through a predefined document interface (1415) when the broadcast command binding is not the same as the stored command binding.

4. The apparatus of claim 3 wherein the applying means comprises means for applying the stored command binding to the document copy (1420) through a predefined document interface (1415) when the broadcast command binding is the same as the stored command binding.

5. The apparatus of claim 1 wherein the predefined document interface (1415) includes a plurality of predefined member functions that receive the command binding as a call parameter and wherein the plurality of predefined member functions include member functions for handling incremental commands.

6. The apparatus of claim 1 wherein the means (1410, 1440) for creating a copy of the shared document (1420, 1450) includes:
means responsive to a document open request from one of the plurality of application programs for pausing the transponder (1460) thereby preventing messages from being broadcast;
means for obtaining a copy (1420, 1450) of the shared document (1490);
means for transferring the document copy (1420, 1450) to the application program issuing the document open request; and
means responsive to the transfer of the shared document copy for resuming the transponder (1460) so that it will resume broadcasting messages.

7. The apparatus of claim 1 further comprising:
means responsive to a first request to open the shared document for constructing a document server program (1475) in the memory (110), the document server program (1475) having a predefined document interface (1685) and means for opening the shared document (1490);
means for causing the document server to join the collaboration session as a collaborator (1480), wherein messages broadcast by the transponder (1460) are received by the document server (1475) and applied to the shared document (1490); and
means in the document server (1475) for creating a copy of the shared document (1420, 1450) for each of the plurality of application programs (1410, 1440).

8. A method for use in a computing system (100) having one or more processors (105) and one or more memories (110), the method providing collaborative access by a plurality of application programs (1410, 1440) to a shared document (1490) and including the steps of creating (1370) a copy (1420,1450) of the shared document (1490) in the one or more memories (110) for each of the plurality of application programs (1410,1440), creating a predefined document interface for each copy (1420,1450) of the shared document (1490) and causing (1350) each of the plurality of application programs to join the collaboration session as a collaborator;
CHARACTERIZED IN THAT
the method comprises the steps of:
(a) receiving messages (640) from each of a plurality of collaborators (1430,1441,1480) and broadcast transmitting received messages to all of the plurality of collaborators (1430,1441,1480) so that each of the plurality of collaborators (1430,1441,1480) receives the same sequence of messages;
(b) receiving a command binding from one of the plurality of application programs (1410) and sending a copy of the received command binding to the transponder (1460) as a message (630); and
(c) applying a command binding broadcast by the transponder (1460) to the application copy (1420, 1450) of the shared document (1490) through the predefined document interface (1415, 1445) for the document copy (1420,1450) to change the data therein.

9. The method of claim 8 wherein the receiving step comprises the step of storing (1506) the command binding received from the application program (1410) in the one or more memories (110).

10. The method of claim 9 wherein the applying step comprises the steps of comparing (1514) a command binding broadcast by the transponder (1460) to the stored command binding and applying (1520) the broadcast command binding to the document copy (1420) through a predefined document interface (1415) when the broadcast command binding is not the same as the stored command binding.

11. The method of claim 10 wherein the applying step comprises the step of applying (1518) the stored command binding to the document copy (1420) through a predefined document interface (1415) when the broadcast command binding is the same as the stored command binding.

12. The method of claim 8 wherein the predefined document interface (1415) includes a plurality of predefined member functions that receive the command binding as a call parameter and wherein the plurality of predefined member functions include member functions for handling incremental commands.

13. The method of claim 8 wherein the step of creating a copy of the shared document (1420, 1450) includes the steps of pausing (1365) the transponder (1460) in response to a document open request from one of the plurality of application programs (1410, 1450) thereby preventing messages from being broadcast; obtaining a copy (1420, 1450) of the shared document (1490); transferring (1370) the document copy (1420, 1450) to the application program issuing the document open request; and resuming (1380) the transponder (1460) so that it will resume broadcasting messages.

14. The method of claim 8 further comprising the steps of:
(d) constructing (1325) a document server program (1475) in the memory (110) in response to a first request to open the shared document, the document server program (1475) having a predefined document interface (1685) and means for opening the shared document (1490);
(e) causing (1340) the document server to join the collaboration session as a collaborator (1480), wherein messages broadcast by the transponder (1460) are received by the document server (1475) and applied to the shared document (1490); and
(i) creating (1335) a copy of the shared document (1420, 1450) for each of the plurality of application programs (1410, 1440).

## Patentansprüche

1. Einrichtung zur Zusammenarbeit für die Benutzung in einem Computersystem (100), das einen oder mehrere Prozessoren (105) und einen oder mehrere Speicher (110) aufweist, die Einrichtung sieht einen gemeinsamen Zugriff während einer Zusammenarbeitssitzung durch eine Vielzahl von Anwendungsprogrammen (1410, 1440) auf ein gemeinsam benutztes Dokument (1490) vor und enthält Mittel (1410, 1440) zum Erzeugen einer Kopie (1420, 1450) des gemeinsam benutzten Dokuments (1490) in einem oder mehreren der Speicher (110) für jedes der Vielzahl von Anwendungsprogrammen (1410, 1440), Mittel zum Erzeugen einer vordefinierten Dokumentenschnittstelle für jede Kopie (1420, 1450) eines jeden gemeinsam benutzten Dokuments und Mittel (JOIN, Fig.6), die jedes der Vielzahl von Anwendungsprogrammen (1410, 1440) veranlassen, an der Zusammenarbeitssitzung teilzunehmen,
gekennzeichnet dadurch, daß die Einrichtung umfaßt:
(a) einen Transponder (1460) in einem oder mehreren der Speicher (110), der auf Mitteilungen (640) anspricht, die von jedem der Vielzahl von Teilnehmern (1430, 1441, 1480) an der Zusammenarbeit empfangen werden zum Aussenden der empfangenen Mitteilungen an alle der Vielzahl von Teilnehmern (1430, 1441, 1480), so daß jeder der Teilnehmer (1430, 1441, 1480) an der Zusammenarbeit die gleiche Folge von Mitteilungen empfängt;
(b) Mittel (1432) zum Empfang einer Befehlsbindung von einem der Vielzahl von Anwendungsprogrammen (1410) und zum Senden einer Kopie der empfangenen Befehlsbindung zu dem Transponder (1460) als eine Mitteilung (630); und
(b) Mittel (1431, 1430, 1443, 1441) in jedem der Vielzahl von Anwendungsprogrammen, die auf eine durch den Transbonder ausgesendete Befehlsbindung ansprechen, zur Anwendung einer Befehlsbindung auf die Anwendungskopie (1420, 1450) des gemeinsam benutzten Dokuments (1490) durch die vordefinierte Dokumentenschnittstelle (1415, 1445) für die Kopie (1420, 1450) zur Änderung der darin enthaltenen Daten.

2. Die Einrichtung von Anspruch 1, worin die Empfangsmittel (1432) Mittel (TSendMessage, Fig. 8) umfassen zum Speichern der von dem Anwendungsprogramm (1410) in einem oder mehr Speichern (110) empfangenen Befehlsbindung.

3. Die Einrichtung von Anspruch 2, worin die Anwendungsmittel (1430, 1431) Mittel umfassen, die auf eine durch den Transbonder (1460) ausgesendete Befehlsbindung ansprechen, zum Vergleich der ausgesendeten Befehlsbindung mit der in den Speichermitteln (SendMessage, Fig. 8) gespeicherten Befehlsbindung, und Mittel zum Anwenden der ausgesendeten Befehlsbindung auf die Dokumentkopie (1420) durch eine vordefinierte Dokumentenschnittstelle, wenn die ausgesendete Befehlsbindung nicht die gleiche ist wie die gespeicherte Befehlsbindung.

4. Die Einrichtung von Anspruch 3, worin die Anwendungsmittel Mittel umfassen zur Anwendung der gespeicherten Befehlsbindung auf die Dokumentkopie (1420) durch eine vordefinierte Dokumentenschnittstelle, wenn die ausgesendete Befehlsbindung die gleiche ist wie die gespeicherte Befehlsbindung.

5. Die Einrichtung von Anspruch 3, worin die vordefinierte Dokumentenschnittstelle (1415) eine Vielzahl von vordefinierten Mitgliedsfunktionen enthält, die die Befehlsbindung als einen Aufrufparameter empfangen, und worin die Vielzahl von vordefinierten Mitgliedsfunktionen Mitgliedsfunktionen zur Behandlung von Inkrementbefehlen enthalten.

6. Die Einrichtung von Anspruch 1, worin die Mittel (1410, 1440) zum Erzeugen einer Kopie des gemeinsam benutzten Dokuments (1420, 1450) enthalten:
Mittel, die auf eine Dokument-Öffnen-Anforderung von einem der Vielzahl von Anwendungsprogrammen ansprechen zum Stillsetzen des Transponders (1460), um damit ein Aussenden von Mitteilungen zu unterbinden;
Mittel zum Erhalten einer Kopie (1420, 1450) des gemeinsam benutzten Dokuments (1490);
Mittel zum Übertragen der Dokumentkopie (1420, 1450) zu dem Anwendungsprogramm, das die Dokument-Öffnen-Anforderung ausgegeben hat; und
Mittel, die auf die Übertragung der gemeinsam benutzten Dokumentkopie ansprechen zum Wiederingangsetzen des Transponders (1460), so daß er ein Aussenden von Mitteilungen wieder aufnimmt.

7. Die Einrichtung von Anspruch 1 umfaßt des weiteren:
Mittel, die auf eine erste Anforderung zum Öffnen des gemeinsam benutzten Dokuments ansprechen zum Einrichten eines Dokument-Server-Programms (1475) in dem Speicher (110), das Dokument-Server-Programms (1475) weist eine vordefinierte Dokumentenschnittstelle (1685) auf und Mittel zum Öffnen des gemeinsam benutzten Dokuments (1490);
Mittel zum Veranlassen des Dokument-Servers, sich als ein Teilnehmer (1480) an der Zusammenarbeitssitzung zu beteiligen, worin durch den Transponder (1460) ausgesendete Mitteilungen von dem Dokument-Server (1475) empfangen und auf das gemeinsam benutzte Dokument angewendet werden; und
Mittel im Dokument-Server (1475) zum Erzeugen einer Kopie des gemeinsam benutzten Dokuments (1420, 1450) für jedes der Vielzahl von Anwendungsprogrammen (1410, 1440).

8. Ein Verfahren zur Benutzung in einem Computersystems (100), das einen oder mehrere Prozessoren (105) und einen oder mehrere Speicher (110) aufweist, das Verfahren sieht einen gemeinsamen Zugriff durch eine Vielzahl von Anwendungsprogrammen (1410, 1440) auf ein gemeinsam benutztes Dokument (1490) vor und enthält die Schritte der Erzeugung (1370) einer Kopie (1420, 1450) des gemeinsam benutzten Dokuments (1490) in einem oder mehreren der Speicher (110) für jedes der Vielzahl von Anwendungsprogrammen (1410, 1440), der Erzeugung einer vordefinierten Dokumentenschnittstelle für jede Kopie (1420, 1450) des gemeinsam benutzten Dokuments und der Veranlassung (1350) eines jedes der Vielzahl von Anwendungsprogrammen (1410, 1440), an der Zusammenarbeitssitzung teilzunehmen,
gekennzeichnet dadurch, daß das Verfahren die Schritte umfaßt:
(a) Empfangen von Mitteilungen (640) von einer Vielzahl von Teilnehmern (1430, 1441, 1480) und Aussenden der empfangenen Mitteilungen zu allen der Vielzahl von Teilnehmern (1430, 1441, 1480), so daß jeder der Vielzahl von Teilnehmern (1430, 1441, 1480) die gleiche Folge von Mitteilungen empfängt;
(b) Empfangen einer Befehlsbindung von einem der Vielzahl von Anwendungsprogrammen (1410) und Senden einer Kopie der empfangenen Befehlsbindung zu dem Transponder (1460) als eine Mitteilung (630); und
(b) Anwenden einer durch den Transbonder (1460) ausgesendeten Befehlsbindung auf die Anwendungskopie (1420, 1450) des gemeinsam benutzten Dokuments (1490) durch die vordefinierte Dokumentenschnittstelle (1415, 1445) für die Dokumentkopie (1420, 1450) zur Änderung der darin enthaltenen Daten.

9. Das Verfahren von Anspruch 8, worin der Empfangsschritt den Schritt der Speicherung (1506) der von dem Anwendungsprogramm (1410) in einem oder mehr Speichern (110) empfangenen Befehlsbindung.

10. Das Verfahren von Anspruch 9, worin der Anwendungsschritt die Schritte des Vergleichs (1514) einer von dem Transbonder (1460) ausgesendeten Befehlsbindung mit der gespeicherten Befehlsbindung und der Anwendung der ausgesendeten Befehlsbindung auf die Dokumentkopie (1420) durch eine vordefinierte Dokumentenschnittstelle umfaßt, wenn die ausgesendete Befehlsbindung nicht die gleiche ist wie die gespeicherte Befehlsbindung.

11. Das Verfahren von Anspruch 10, worin der Anwendungsschritt den Schritt (1518) umfaßt, die gespeicherte Befehlsbindung auf die Dokumentkopie (1420) durch eine vordefiniertes Dokumentenschnittstelle anzuwenden, wenn die ausgesendete Befehlsbindung die gleiche ist wie die gespeicherte Befehlsbindung.

12. Das Verfahren von Anspruch 8, worin die vordefinierte Dokumentenschnittstelle (1415) eine Vielzahl von vordefinierten Mitgliedsfunktionen enthält, die die Befehlsbindung als ein Aufrufparameter empfangen, und worin die Vielzahl von vordefinierten Mitgliedsfunktionen Mitgliedsfunktionen zur Behandlung von Inkrementbefehlen enthält.

13. Das Verfahren von Anspruch 8, worin der Schritt zum Erzeugen einer Kopie des gemeinsam benutzten Dokuments (1420, 1450) die Schritte enthalten, den Transponder (1460) auf eine Dokument-Öffnen-Anforderung von einem der Vielzahl von Anwendungsprogrammen (1410, 1450) hin stillzusetzen, um damit das Aussenden von Mitteilungen zu unterbinden; Erhalten einer Kopie (1420, 1450) des gemeinsam benutzten Dokuments (1490); Übertragen (1325) der Dokumentkopie (1420, 1450) zu dem Anwendungsprogramm, das die Dokument-Öffnen-Anforderung ausgegeben hat; und Wiederingangsetzen (1380) des Transponders (1460), so daß er ein Aussenden von Mitteilungen wieder aufnimmt.

14. Das Verfahren von Anspruch 8 umfaßt des weiteren die Schritte:
(d) Einrichten (1325) eines Dokument-Server-Programms (1475) in dem Speicher (110) auf eine erste Anforderung zum Öffnen des gemeinsam benutzten Dokuments hin, das Dokument-Server-Programms (1475) weist eine vordefinierte Dokumentenschnittstelle (1685) auf und Mittel zum Öffnen des gemeinsam benutzten Dokuments (1490);
(e) Veranlassen (1340) des Dokument-Servers, sich als ein Teilnehmer (1480) an der Zusammenarbeitssitzung zu beteiligen, worin durch den Transponder (1460) ausgesendete Mitteilungen vom Dokument-Server (1475) empfangen und auf das gemeinsam benutzte Dokument (1490) angewendet werden; und
(i) Erzeugen (1335) einer Kopie des gemeinsam benutzten Dokuments (1420, 1450) für jedes der Vielzahl von Anwendungsprogrammen (1410, 1440).

## Revendications

1. Appareil de collaboration destiné à être utilisé dans un système d'ordinateur (100) ayant un ou plusieurs processeurs (105) et une ou plusieurs mémoires (110), l'appareil fournissant un accès de collaboration durant une session de collaboration par une pluralité de programmes d'application (1410, 1440) à un document partagé (1490) et comprenant des moyens (1410, 1440) pour créer une copie (1420, 1450) du document partagé (1490) dans une ou plusieurs mémoires (110) pour chacun de la pluralité de programmes d'application (1410, 1440), des moyens (1415, 1445) pour créer une interface de document prédéfinie pour chaque copie (1420, 1450) du document partagé (1490) et des moyens (JOIN, Fig.6) pour que chacun de la pluralité de programmes d'application (1410, 1440) se joigne à la session de collaboration en tant que collaborateur,
CARACTERISE EN CE QUE
l'appareil de collaboration comprend
a) un transpondeur (1460) dans une ou plusieurs mémoires (110) sensible aux messages reçus de chacun de la pluralité des collaborateurs (1430, 1441, 1480) pour diffuser les messages reçus à tous les collaborateurs (1430, 1441, 1480) de sorte que chacun de la pluralité des collaborateurs (1430, 1441, 1480) reçoive la même séquence de messages,
b) des moyens (1432) pour recevoir une commande de liaison provenant de l'un de la pluralité de programmes d'application (1410) et envoyer une copie de la commande de liaison reçue au transpondeur (1460) en tant que message (630), et
c) des moyens (1431, 1430, 1443, 1441) dans chaque programme d'application et en réponse à une commande de liaison diffusée par le transpondeur, pour appliquer une commande de liaison à la copie d'application (1420, 1450) du document partagé (1490) à travers l'interface de document prédéfinie (1415, 1445) pour changer les données de la copie (1420, 1450).

2. Appareil selon la revendication 1, dans lequel les moyens pour recevoir (1432) comprennent des moyens (TsendMessage, Fig 8) pour emmagasiner la commande de liaison reçue du programme d'application (1410) dans une ou plusieurs mémoires.

3. Appareil selon la revendication 2, dans lequel les moyens pour appliquer (1430, 1431) comprennent des moyens sensibles à une commande de liaison diffusée par le transpondeur (1460) pour comparer la commande de liaison diffusée à la commande de liaison emmagasinée par les moyens d'emmagasinage (TsendMessage, Fig 8) et des moyens pour appliquer la commande de liaison diffusée à la copie de document (1420) à travers une interface de document prédéfinie (1415) lorsque la commande de liaison diffusée n'est pas la même que la commande de liaison emmagasinée.

4. Appareil selon la revendication 3, dans lequel les moyens pour appliquer comprennent des moyens pour appliquer la commande de liaison emmagasinée à la copie de document (1420) à travers une interface de document prédéfinie (1415) lorsque la commande de liaison diffusée n'est pas la même que la commande de liaison emmagasinée.

5. Appareil selon la revendication 1, dans lequel l'interface de document prédéfinie (1415) comprend une pluralité de fonctions d'élément prédéfinies qui reçoivent la commande de liaison comme un paramètre d'appel et dans lequel la pluralité de fonctions prédéfinies comprend des fonctions d'élément pour traiter des commandes de liaisons incrémentales.

6. Appareil selon la revendication 1, dans lequel les moyens (1410, 1440) pour créer une copie du document partagé (1420, 1450) comprennent :
des moyens sensibles à une requête ouverte de document de l'un de la pluralité de programmes d'application pour mettre le transpondeur (1460) en pause empêchant ainsi les messages d'être diffusés,
des moyens pour obtenir une copie (1420, 1450) du document partagé (1490),
des moyens pour transférer la copie de document (1420, 1450) au programme d'application délivrant la requête ouverte de document, et
des moyens sensibles au transfert de la copie du document partagé pour redémarrer le transpondeur (1460) de sorte qu'il recommence la diffusion des messages.

7. Appareil selon la revendication 1, comprenant en outre :
des moyens sensibles à une première requête pour ouvrir le document partagé de façon à construire un programme de serveur de document (1475) dans la mémoire (110), le programme de serveur de document (1475) ayant une interface de document prédéfinie (1685) et des moyens pour ouvrir le document partagé (1490),
des moyens pour que le serveur de document rejoigne la session de collaboration en tant que collaborateur (1480), dans lesquels les messages diffusés par le transpondeur (1460) sont reçus par le serveur de document (1475) et appliqués au document partagé (1490), et
des moyens dans le serveur de document (1475) pour créer une copie du document partagé (1420, 1450) pour chacun de la pluralité de programmes d'application (1410, 1440).

8. Méthode destinée à être utilisée dans un système d'ordinateur (100) ayant un ou plusieurs processeurs (105) et une ou plusieurs mémoires (110), la méthode fournissant un accès de collaboration par une pluralité de programmes d'application (1410, 1440) à un document partagé (1490) et comprenant les étapes de créer (1370) une copie (1420, 1450) du document partagé (1490) dans une ou plusieurs mémoires (110) pour chacun de la pluralité de programmes d'application (1410, 1440), créer une interface de document prédéfinie pour chaque copie (1420, 1450) du document partagé (1490) et faire en sorte (1350) que chacun de la pluralité de programmes d'application se joigne à la session de collaboration en tant que collaborateur,
CARACTERISE EN CE QUE
La méthode comprend les étapes de :
a) recevoir des messages (640) de chacun de la pluralité des collaborateurs (1430, 1441, 1480) et diffuser les messages reçus à tous les collaborateurs (1430, 1441, 1480) de sorte que chacun de la pluralité des collaborateurs (1430, 1441, 1480) reçoive la même séquence de messages,
b) recevoir une commande de liaison provenant de l'un de la pluralité de programmes d'application (1410) et envoyer une copie de la commande de liaison reçue au transpondeur (1460) en tant que message (630), et
c) appliquer une commande de liaison diffusée par le transpondeur (1460) à la copie d'application (1420, 1450) du document partagé (1490) à travers l'interface de document prédéfinie (1415, 1445) pour changer les données de la copie de document (1420, 1450).

9. Méthode selon la revendication 8, dans laquelle l'étape de recevoir comprend l'étape d'emmagasiner (1506) la commande de liaison reçue du programme d'application (1410) dans une ou plusieurs mémoires (110).

10. Méthode selon la revendication 9, dans laquelle l'étape d'appliquer comprend les étapes de comparer (1514) la commande de liaison diffusée par le transpondeur (1460) à la commande de liaison emmagasinée et appliquer (1520) la commande de liaison diffusée à la copie de document (1420) à travers une interface de document prédéfinie (1415) lorsque la commande de liaison diffusée n'est pas la même que la commande de liaison emmagasinée.

11. Méthode selon la revendication 10, dans laquelle l'étape d'appliquer comprend l'étape d'appliquer (1518) la commande de liaison emmagasinée à la copie de document (1420) à travers une interface de document prédéfinie (1415) lorsque la commande de liaison diffusée n'est pas la même que la commande de liaison emmagasinée.

12. Méthode selon la revendication 8, dans laquelle l'interface de document prédéfinie (1415) comprend une pluralité de fonctions d'élément prédéfinies qui reçoivent la commande de liaison comme un paramètre d'appel et dans laquelle la pluralité de fonctions prédéfinies comprend des fonctions d'élément pour traiter des commandes incrémentales.

13. Méthode selon la revendication 8, dans laquelle l'étape de créer une copie du document partagé (1420, 1450) comprend les étapes de mettre le transpondeur (1460) en pause (1365) en réponse à une requête ouverte de document de l'un de la pluralité de programmes d'application empêchant ainsi les messages d'être diffusés, obtenir une copie (1420, 1450) du document partagé (1490), transférer (1370) la copie de document (1420, 1450) au programme d'application délivrant la requête ouverte de document, et redémarrer (1380) le transpondeur (1460) de sorte qu'il recommence la diffusion des messages.

14. Méthode selon la revendication 1, comprenant en outre les étapes de :
construire (1325) un programme de serveur de document (1475) dans la mémoire (110) en réponse à une première requête pour ouvrir le document partagé, le programme de serveur de document (1475) ayant une interface de document prédéfinie (1685) et ouvrir le document partagé (1490),
faire en sorte (1340) que le serveur de document rejoigne la session de collaboration en tant que collaborateur (1480), les messages diffusés par le transpondeur (1460) étant reçus par le serveur de document (1475) et appliqués au document partagé (1490), et
créer (1385) une copie du document partagé (1420, 1450) pour chacun de la pluralité de programmes d'application (1410, 1440).
